# FASCICULE DE BREVET EUROPEEN

(11) **EP 0 519 038 B1**
(45) Date de publication et mention de la délivrance du brevet: **19.07.1995**
(21) Numéro de dépôt: 92902322.4
(22) Date de dépôt: 26.11.1991
(51) Int. Cl.: B64G 1/24

(54) **PROCEDE DE CONTROLE D'ATTITUDE EN TANGAGE D'UN SATELLITE GRACE A LA PRESSION DE RADIATION SOLAIRE ET SATELLITE ADAPTE A SA MISE EN UVRE**
VERFAHREN ZUR STEUERUNG DES NICKWINKELS EINES SATELLITEN MITTELS SONNENWINDDRUCK UND SATELLIT ZUR DURCHFÜHRUNG DESSELBEN
METHOD FOR CONTROLLING THE PITCH ATTITUDE OF A SATELLITE BY MEANS OF SOLAR RADIATION PRESSURE, AND A SATELLITE, FOR IMPLEMENTING SAME

(30) Priorité: 30.11.1990 FR 9015050
(43) Date de publication de la demande: 23.12.1992
(73) Titulaire: AEROSPATIALE Société Nationale Industrielle, 75781 Paris Cédex 16 (FR)
(72) Inventeur: FLAMENT, Patrick, F-06110 Le Cannet (FR); PERDU, Michel, F-83600 Fréjus (FR); PORTIER, Jean, F-06400 Cannes (FR); BRUNET, Pierre, F-06810 Auribeau-s/-Siagne (FR)
(74) Mandataire: Rinuy, Santarelli
(86) Numéro de dépôt international: FR9100938
(87) Numéro de publication internationale: WO9209479

(56) Documents cités:
- EP-A- 0 195 553
- EP-A- 0 295 978
- FR-A- 2 550 757
- US-A- 5 020 746
- AIAA 20th International Electric Propulsion Conference, octobre 1988, T. Duhamel et al.: "Design and integration of an electric propulsion system on the Eurostar Spacecraft", pages 217-223, voir page 217, colonne 2, ligne 14 - page 219, colonne 2, ligne 27; figures 1-4,6 (cité dans la demande)
- Patent Abstracts of Japan, vol. 13, no.567(M-908)(3915) 15.Dec.1989,& JP-A-1237296 (Mitsubishi Electric Corp.) 21 sept. 1989,
- Frank E. Marble and J. Surugue:"Physics and technology on ion motors", , 1966, Gordon and Breach Science Publishers, New York, US, pages 393-422, voir page393, lignes 22-30,page 405, ligne 19 - page 406, ligne 4; page415, ligne 10 - page 418, ligne 26; figure 17

## Description

L'invention concerne le contrôle de l'attitude autour de ses trois axes d'un satellite, généralement géostationnaire, stabilisé autour de ses trois axes, avec une possible compensation de couples perturbateurs agissant sur le satellite autour des axes roulis/lacet durant les manoeuvres de contrôle d'orbite.

Elle concerne également la configuration générale de satellites stabilisés en attitude autour de leurs trois axes géométriques en orbite géostationnaire, qu'ils soient à utilisation civile ou militaire, commerciale ou scientifique, voire mixte.

Un satellite représente ici tout objet artificiel évoluant dans le système solaire, cet objet pouvant être :
- sur une orbite de la terre ou d'une quelconque autre planète ou objet du système solaire,
- sur une orbite solaire, éventuellement de transfert entre deux planètes.

On sait que, sur son orbite, un satellite est soumis à des couples perturbateurs qui nécessitent de contrôler son attitude. Leurs causes les plus importantes sont :
- la dissymétrie par rapport au centre de gravité (dans l'espace on parle plutôt du centre de masse) des effets de la pression de radiation solaire (en raccourci : pression solaire) due à l'incidence (différence par rapport à 90°) de l'axe de tangage du satellite par rapport au soleil, aux différences de réflectivité des éléments du satellite et aux dissymétries géométriques du satellite,
- l'action du champ magnétique local (par exemple terrestre),
- l'influence aérodynamique de l'environnement (pour les orbites basses),
- la distance du centre de gravité du satellite à l'axe du vecteur poussée résultant des moteurs utilisés pour modifier l'orbite du satellite.

On peut ainsi distinguer :
- des perturbations liées à l'environnement : effet de pression solaire, de l'interaction du dipôle magnétique du satellite avec le champ magnétique environnant, gradient de gravité ... Ces perturbations sont faibles mais sont appliquées en permanence sur le satellite (ordre de grandeur = 10⁻⁵N.m),
- des perturbations liées au mésalignement du vecteur poussée des propulseurs chimiques de contrôle d'orbite par rapport au centre de gravité du satellite. Ces perturbations sont plus importantes mais limitées dans le temps (ordre de grandeur = 10 N.m.s. par jour pour un satellite géostationnaire).

Aussi, il est indispensable de prévoir des moyens pour contrôler l'attitude d'un satellite sur son orbite. On a déjà prévu à cet effet divers moyens actifs, qui mettent respectivement en oeuvre plusieurs roues à réaction ou des tuyères à éjections de matière, mais :
- l'utilisation du principe d'une éjection de masse entraîne la nécessité d'emporter une réserve de masse, ce qui alourdit le satellite lors de son lancement,
- l'utilisation de tuyères à jet de gaz entraîne de fortes perturbations qui excitent les modes souple et de nutation du satellite, dégradant ainsi sa précision de pointage,
- l'utilisation de tuyères de faible poussée telle que tuyère ionique ou tuyère à ionisation par arc électrique est très consommatrice de puissance électrique et nécessite des phases de préchauffage qui dissuadent généralement l'homme de métier de les utiliser pour le contrôle d'attitude,
- l'utilisation de roues à réaction ne se suffit pas à elle-même car elles doivent de temps à autre être désaturées (leur vitesse doit être rapprochée de sa valeur nominale) et cette désaturation nécessite l'application d un couple extérieur au satellite.

Aussi, lorsque l'on désire contrôler l'attitude d'un satellite pour un budget de masse optimal, on tire profit des forces perturbatrices dues :
- à la pression solaire (par l'orientation convenable de surfaces liées au satellite),
- ou au champ magnétique local, par exemple terrestre, (par la création de dipôles magnétiques à bord du satellite par des couples de courant).

Divers documents ont déjà proposé de tirer parti de la pression de radiation solaire pour le pilotage de l'attitude ou le contrôle d'orbite (maintien à poste) des satellites, en utilisant des surfaces mobiles orientables à l'aide d'actionneurs spécifiques ou en tirant parti des moteurs d'orientation déjà présents à bord.

Ainsi le brevet FR-2.513.589 décrit un procédé et un dispositif pour aligner avec une direction désirée l'axe de roulis d'un satellite stabilisé par autorotation et muni d'une pluralité de panneaux solaires fixes : des surfaces mobiles sont montées aux extrémités des panneaux ;
. le brevet FR-2.550.757 propose pour la régulation de position de satellites, d'agir sur les panneaux solaires en leur imposant à chacun une courbure ajustable vers l'arrière, donc en les déformant ;
. le brevet FR-2.529.166 concerne un procédé de maintien en position d'un satellite par la navigation à l'aide de voiles solaires et un véhicule spatial mettant en oeuvre le procédé. Sur ce satellite sont montées des voiles solaires disposées au Nord et au Sud, au bout de mâts parallèles à l'axe Nord-Sud. Ces mâts peuvent tourner sur eux-mêmes et les voiles sont inclinables autour d'axes transversaux à ces mâts ;
. le brevet DE-2.537.577 intitulé "Lagerregelung fur Satelliten" enseigne de prévoir au bout des panneaux solaires des surfaces orientables autour de l'axe des panneaux solaires et transversalement à celui-ci ;
. le brevet US-3.304.028 intitulé "attitude control for spacecraft", est similaire au document FR-2.513.589 précité. Il en est de même du document US-3.339.863 ;
. le brevet FR-2.530.046 intitulé "procédé et dispositif de commande d'attitude pour satellite géosynchrone, enseigne de rajouter des surfaces fixes sur les côtés des panneaux solaires ;
. le brevet FR-2.531.547 intitulé "système de contrôle d'attitude d'un satellite géostationnaire", enseigne de jouer sur les orientations relatives des panneaux solaires autour de leurs axes.

Il en est de même du brevet US-4.325.124 intitulé "système for controling the direction of the momentum vector of a geosynchronous satellite" ;

Le document européen 0.295.978 propose un dispositif et un procédé de pointage d'une sonde spatiale vers un corps céleste : on ajoute au satellite des voiles solaires Nord et Sud dissymétriques, soit par leur surface, soit par leurs orientations autour d'un axe Nord-Sud ou par leurs inclinaisons transversalement à cet axe.

Le brevet français 2.522.614 propose une configuration de satellite à moyens solaires perfectionnés, comportant des panneaux solaires orientés transversalement à l'axe Nord-Sud et orientables autour d'axes transversaux à cet axe Nord-Sud.

Le document US-4.262.867 prévoît des panneaux solaires adaptés à se rétracter partiellement en accordéon, de part et d'autre desquels des voiles solaires sont articulées autour d'axes transversaux à l'axe longitudinal de ces panneaux.

Ces documents concernent des dispositifs de contrôle d'attitude qui utilisent la pression solaire comme moyen d'actionnement. Mais toutes ces solutions ont l'un des défauts suivants :
- soit ils nécessitent l'ajout de surfaces additionnelles, ce qui présente les inconvénients suivants :
   . ces surfaces ajoutées augmentent la masse du satellite,
   . l'ajout de mécanismes spécifiques de déploiement pour ouvrir les surfaces sur orbite entraîne une augmentation de la masse et un risque de panne accru,
   . l'encombrement supplémentaire dû à ces surfaces pénalise le volume du satellite lors du lancement,
- soit ils ne prévoient de piloter l'attitude du satellite que suivant un ou deux axes, nécessitant de prévoir un autre moyen pour contrôler le troisième axe.

Par ailleurs, différents documents ont proposé de déplacer le centre de gravité du satellite pour diminuer les couples perturbateurs liés au mésalignement entre centre de gravité et vecteur poussée des moteurs (ou pression solaire). En particulier, on peut citer :
. le brevet américain 4.684.084 intitulé "spacecraft structure with symmetrical mass center and asymetrical deployable appendages",
. le brevet américain 4.345.728 intitulé "method for controlling the attitude of a spinning spacecraft in presence of solar pressure",
. le brevet américain 3.516.623 intitulé "station keeping system".

Les brevets 3.516.623 et 4.345.728 envisagent, dans un satellite stabilisé par autorotation de diminuer les couples perturbateurs liés au mésalignement entre centre de gravité et poussée en déplaçant le centre de gravité à l'aide de masses mobiles, ces masses et leurs actionneurs n'ayant pas d'autre fonction.

Quant au brevet 4.684.084, il décrit une configuration de satellite sur lequel les couples perturbateurs liés au mésalignement entre centre de gravité et poussée des tuyères de contrôle d'orbite sont diminués. Le centre de gravité est rapproché de l'axe de poussée par un positionnement convenable (prévu au sol et non réglable en vol) des ailes de générateur solaire après déploiement. Cette configuration permet de garder un centre de gravité à peu près fixe malgré le déploiement d'appendices fortement dissymétriques, sans possibilité de modifier en vol la position des ailes de générateur solaire. Il présente pour inconvénient d'accroître les couples perturbateurs d'origine solaire et de ne rien prévoir pour leur compensation.

Pour ce qui est de la propulsion utilisée en phase opérationnelle sur les satellites stabilisés 3-axes connus à ce jour, notamment aux Etats-Unis, au Japon ou en Europe, elle est purement chimique (par exemple hydrazine ou mélange hypergotique) ou chimique avec apport d'énergie électrique (exemple : hydrazine à réchauffage "Power augmented catalytic thruster PACT" ou à arc électrique : "Arcjet"), ou encore ionique ou à plasma pour les corrections d'orbite.

Mais le contrôle d'attitude en est réalisé in fine par des propulseurs chimiques, avec stockage intermédiaire de moment d'inertie dans une ou plusieurs roues à inertie autour de deux ou trois axes.

On peut notamment citer à ce propos les publications suivantes :
- "The attitude determination and control subsystem of the Intelsat V Spacecraft" - Proceedings of the AOCS Conference, Noordwijk, Octobre 1977,
- "Precision attitude control with a single body-fixed momentum wheel" - AIAA Mechanics and Control of Flight Conference - Anaheim, California, Août 1974,
- US Patent 4.949.922 du 21/08/1990 pour "Satellite control system",
- "Systèmes de contrôle d'attitude et d'orbite de satellite : évolution jusqu'aux années 80-90" - L'Aéronautique et l'Astronautique - n°69, 1878-2 - p 33-56.

De même, l'utilisation de la propulsion électrique pour le contrôle d'orbite et même le contrôle d'attitude est largement envisagée à l'heure actuelle, ainsi que cela ressort notamment des publications suivantes :
- "Electric Propulsion Projects and Researches in Japan"-AIAA 20th International Electric Propulsion Conference-Garmisch - Partenkirchen (Germany) - Octobre 1988,
- "Design and integration of an electric propulsion system on the Eurostar spacecraft" - même conférence que ci-dessus,
- "Readiness Appraisial : Ion Propulsion for Communication Satellites" - AIAA 12th International Communication Satellite Systems Conference - Crystal City - March 1988,
- "Chemical and electric propulsion tradeoffs for communication satellites" - Comsat Technical Review Volume 2 Number 1, Spring 1972 - pp 123-145.

En ce qui concerne la propulsion ionique en soi, on peut également citer, notamment :
- FR-2.510.304 (Agence Spatiale Européenne), publié le 28 Janvier 1989 pour "Source ionique à émission de champ, notamment pour propulsion ionique à application spatiales",
- US-3.279.176 (BODEN) publié le 18 Octobre 1966 pour "Ion Rocket Engine",
- US-4.829.784 (BERG et al.) publié le 16 May 1989 pour "Method and system for storing inert gas for electric impulse space drives".

L'invention a pour objet, au prix d'un supplément de masse le plus faible possible, de permettre de tirer parti de la pression de radiation solaire s'appliquant sur les surfaces préexistantes prévues principalement pour être soumises au rayonnement solaire (ailes de générateur solaire et/ou voiles solaires) pour contrôler en tangage l'attitude d'un satellite d'une manière qui soit à la fois fiable et simple tout en étant découplé et compatible avec tout type connu de contrôle d'attitude en roulis/lacet, par exemple fondé également sur la pression de radiation solaire.

Elle a également pour objet, pour réduire la puissance installée nécessaire au contrôle d'attitude, de minimiser les perturbations sur cette attitude induites lors des manoeuvres de contrôle d'orbite, et ce sans pénalité notable ni en masse, ni en fiabilité.

L'invention a également pour objet, à titre subsidiaire, de permettre d'introduire une redondance sur les moteurs d'entraînement des ailes de générateur solaire qui constituent à ce jour des points de panne unique (en anglais : Single Point Failure).

L'invention a comme autre objet de tirer un parti maximum, pour le contrôle d'attitude (sur les trois axes) et d'orbite, de la propulsion électrique (qui a pour gros avantage une bien meilleure impulsion spécifique que la propulsion chimique), d'un système de stockage d'énergie cinétique avantageusement sans rigidité gyroscopique à base de roues de réaction (plus légères que des roues d'inertie gardant un moment cinétique en permanence non nul), et des forces généralement qualifiées de perturbatrices générées par la pression de radiation solaire, pour pouvoir se dispenser de toute propulsion chimique en phase opérationnelle et pour minimiser la masse globale des éléments du satellite spécifiquement destinés au contrôle d'attitude (sur les trois axes) et d'orbite, ce pour un coût modéré (fabrication et lancement) tout en augmentant la fiabilité globale de ces éléments (grâce à la suppression des risques de fuites liés à la mise en oeuvre de la propulsion chimique).

Elle propose à cet effet un satellite stabilisé 3-axes décrivant une orbite, comportant un corps ayant un axe de tangage sensiblement perpendiculaire au plan de l'orbite et comportant au moins une surface destinée principalement à être soumise au rayonnement solaire et s'étendant à partir du corps selon une direction donnée sensiblement parallèle à l'axe de tangage, un calculateur de bord et, connectés à ce dernier, un système de détection d'attitude adapté à détecter l'attitude du corps au moins autour de l'axe de tangage, des moyens actifs de contrôle d'attitude adaptés à appliquer des couples de correction d'attitude au moins en tangage, et des moyens de contrôle d'orbite adaptés à appliquer au satellite des poussées selon des axes de poussée, caractérisé en ce que ces moyens de contrôle d'attitude en tangage comportent des moyens de commande en basculement, entre cette surface et le corps, adaptés à commander en basculement cette surface sensiblement transversalement au rayonnement solaire avec une amplitude ajustée par le calculateur de bord, avec ou sans intervention du sol, en sorte de générer, par interaction de cette surface avec la pression de radiation solaire, lesdits couples de correction d'attitude en tangage.

En fait l'existence sur un satellite de moyens de basculement adaptés à faire tourner des ailes de générateur solaire autour de plusieurs directions, notamment perpendiculairement à la direction longitudinale des ailes, a déjà été proposée dans le document EP-A-0.195.553. Mais ce document ne se préoccupe pas de générer grâce à des basculements transversalement au rayonnement solaire, par interaction avec celui-ci, des couples de correction d'attitude autour de cette direction longitudinale. En fait ce document concerne la stabilisation d'un véhicule spatial habité, en orbite basse, dans un premier mode pointé-Terre à l'aide principalement d'un système passif de contrôle d'attitude comportant des moyens de stabilisation par gradient de gravité, et dans un second mode pointé-Soleil à l'aide principalement d'un système actif de contrôle d'attitude. Les ailes sont parallèles au plan orbital, soit en sens opposés (véhicule seul) soit côte à côte (véhicules appariés).

Selon des dispositions préférées de l'invention :
- ladite surface destinée principalement à être soumise au rayonnement solaire est une aile plane de générateur solaire s'étendant selon la direction donnée et connectée au satellite par un moteur d'entraînement adapté à faire tourner cette aile autour de ladite direction donnée,
- les moyens de commande en basculement comportent ce moteur d'entraînement et un second moteur situé entre ce moteur d'entraînement et l'aile de générateur solaire,
- ce second moteur est un moteur rotatif d'axe incliné selon un angle non nul par rapport à cette direction donnée,
- cet angle non nul est typiquement compris entre 1° et 20°, de préférence entre 2° et 15°,
- en variante, les moyens de commande en basculement comportent un moteur de commande en pivotement d'axe transversal à cette direction donnée,
- ce moteur admet une plage d'utilisation préférentiellement de ± 20° (voire ± 15°) par rapport à cette direction donnée,
- en variante, les moyens de commande en basculement comportent un second moteur de commande en pivotement d'axe transversal à cette direction donnée présentant une inclinaison non nulle avec l'axe du premier moteur de pivotement,
- en variante, les moyens de commande de basculement comportent un moteur linéaire s'étendant suivant une direction inclinée par rapport à la direction donnée et monté sur un côté d'un triangle articulé déformable faisant partie du bras d'éloignement reliant ladite surface au satellite,
- les moyens de contrôle d'orbite comportent des tuyères électriques, par exemple ioniques,
- les moyens de contrôle d'orbite comportent des tuyères à ionisation par arc électrique, ou des tuyères à plasma,
- les moyens de contrôle d'attitude comportent cette surface et les moyens de commande en basculement,
- les moyens de contrôle d'attitude comportent un système à moment cinétique orientable.

L'invention propose également un satellite destiné à être stabilisé en attitude selon des axes de roulis, lacet et tangage sur une orbite terrestre au moins approximativement circulaire autour de l'axe NORD-SUD de la Terre et comportant un corps muni de faces NORD et SUD, un ensemble de détection d'attitude, un calculateur de bord connecté à cet ensemble de détection d'attitude, au moins une aile de générateur solaire s'étendant sensiblement parallèlement à l'axe de tangage et reliée au corps par un dispositif de commande en rotation autour de l'axe de tangage commandés par le calculateur de bord en sorte que cette aile reste en permanence au moins approximativement perpendiculaire au rayonnement solaire, un système de stockage d'énergie cinétique selon au moins trois axes commandé par le calculateur de bord, et un système de propulsion de contrôle d'attitude et de correction d'orbite commandé par le calculateur de bord et comportant des moyens de contrôle d'attitude et un système de propulsion de correction d'orbite, caractérisé en ce que :
- le système de propulsion de contrôle correction d'orbite est exclusivement électrique, et comporte au moins une première paire de deux propulseurs électriques disposés sensiblement symétriquement par rapport au plan des axes de tangage et de lacet avec des inclinaisons non nulles par rapport au plan des axes de roulis et de lacet et au plan des axes de tangage et de lacet, et des inclinaisons au plus égales à 20° environ par rapport au plan des axes de roulis et de tangage, et
- le moyens de contrôle d'attitude comportent, entre ce corps et cette aile de générateur solaire, un dispositif de commande en basculement de cette aile adapté à commander en basculement cette aile transversalement au rayonnement solaire, ce dispositif de commande en basculement étant commandé par le calculateur de bord en sorte de générer par interaction avec le rayonnement solaire, des couples de contrôle d'attitude en tangage.

Selon des dispositions préférées de l'invention éventuellement combinées :
- les propulseurs électriques de ladite première paire sont disposés auprès de l'une des faces NORD et SUD,
- les propulseurs électriques de ladite première paire sont disposés auprès d'arêtes bordant cette face parallèlement à l'axe de lacet,
- les propulseurs électriques sont disposés sensiblement au milieu de ces arêtes,
- le système de propulsion comporte une seconde paire de deux propulseurs électriques disposés sensiblement symétriquement par rapport au plan des axes de tangage et de lacet avec des inclinaisons non nulles par rapport au plan des axes de roulis et de lacet mais de sens contraire de celles des propulseurs de la première paire, des inclinaisons non nulles par rapport au plan des axes de lacet et de tangage, et des inclinaisons au plus égales à 20° environ par rapport au plan des axes de roulis et de tangage,
- les première et seconde paires de propulseurs électriques sont sensiblement symétriques par rapport au plan des axes de roulis et de lacet,
- le système de propulsion comporte quatre propulseurs électriques seulement,
- chaque propulseur électrique a une inclinaison par rapport à l'axe de roulis dont la valeur absolue est comprise entre 40° et 75°, et une inclinaison par rapport à l'axe de tangage dont la valeur absolue est comprise entre 15° et 65°,
- ce satellite comporte une seconde aile de générateur solaire s'étendant sensiblement parallèlement à l'axe de tangage à l'opposé de la première aile, et reliée au corps par un second dispositif de commande en rotation autour de l'axe de tangage commandé par le calculateur de bord en sorte que cette seconde aile reste en permanence au moins approximativement perpendiculaire au rayonnement solaire, et par un second dispositif de commande en basculement de cette seconde aile parallèlement à une pluralité de plans contenant l'axe de tangage, les dispositifs de commande en basculement des ailes étant commandés conjointement par le calculateur de bord,
- le système de stockage d'énergie cinétique est dépourvu de rigidité gyroscopique permanente, étant formées d'au moins trois roues à réaction à moment cinétique pouvant devenir nul.

Cet aspect de l'invention ne concerne donc ni l'utilisation de la propulsion électrique en soi pour réaliser des manoeuvres de correction d'orbite, ni un système de contrôle d'attitude sans rigidité gyroscopique nominale en soi, mais une combinaison particulière des deux, avec la possibilité (voir ci-dessus) de déplacer transversalement à l'axe de tangage le centre de poussée de la pression de radiation solaire sur les ailes, qui permet :
1 - de ne jamais utiliser de propulseurs chimiques pendant la phase opérationnelle (en pratique géostationnaire),
2 - de ne monter que quatre propulseurs électriques (il peut même suffire d'en prévoir deux si on les suppose suffisamment fiables) pour assurer, même avec une panne de l'un des propulseurs, les corrections d'orbite dans les directions NORD-SUD (à peu près 50 m/s par an) et EST-OUEST (à peu près 5 m/s par an),
3 - de n'avoir pas besoin de système de repointage ("gimbal") des propulseurs électriques.

En ce qui concerne le point 1, l'utilisation de propulseurs chimiques pendant la phase géostationnaire est en effet indispensable à tous les satellites existants ou envisagés jusqu'ici pour :
- soit contrôler directement de un à trois axes du satellite par l'intermédiaire d'une boucle de réaction détecteur d'attitude-processeur-actionneur chimique,
- soit désaturer les roues à réaction ou à inertie ayant emmagasiné des moments cinétiques autour de un à trois axes du satellite (la boucle de réaction globale est alors : détecteur d'attitude-processeur-stockage de moment cinétique - détecteur de vitesse-actionneur chimique),
- soit pallier aux besoins de toute combinaison axe par axe des deux possibilités (contrôle direct ou stockage intermédiaire).

Le satellite conforme à cet aspect de l'invention utilise la propulsion électrique pour désaturer (rapprocher de zéro) le moment cinétique stocké autour de l'axe de lacet. La désaturation des autres axes (roulis et tangage) est assurée par des moyens classiques, non chimiques, comme l'utilisation de voiles solaires ou des boucles magnétiques. La désaturation du moment cinétique stocké autour de l'axe de lacet est en effet rendue possible par la nécessité d'effectuer des manoeuvres de correction d'orbite une fois par jour au minimum. Il suffit alors de prévoir la manoeuvre de façon à faire fonctionner l'un des propulseurs électriques plus longtemps que l'autre.

De plus, la propulsion électrique, avec des poussées de 10 à 40 mN (millinewton) par propulseur impose des manoeuvres quotidiennes d'à peu près une heure de durée, à comparer à des manoeuvres bi-hebdomadaires de 100 secondes, typiquement pour des poussées de l'ordre de 10 Newton, avec des propulseurs chimiques.

A bras de levier égal, les moments perturbateurs accumulés pendant une manoeuvre NORD-SUD typique sont donc, à peu près, dix fois moindres pour la propulsion électrique que pour la propulsion chimique, et accumulables dans des roues à réaction par exemple sans nécessiter de roues plus grosses du type roues d'inertie. Par contre, dans le cas de la propulsion chimique, les couples perturbateurs induits par les corrections d'orbite sont tellement élevés que des roues cinétiques ou à réaction ne sont pas capables de s'y opposer.

Seule la propulsion électrique permet l'usage de petites roues à réaction pour l'absorption des moments perturbateurs et donc la conservation de l'attitude du satellite. Par définition, de petites roues à réaction ne confèrent pas de rigidité gyroscopique nominale au satellite : la valeur moyenne sur la vie du satellite du moment cinétique accumulé, axe par axe, est zéro ou très proche de zéro, avec une large bande de variation en valeurs positives et négatives.

En ce qui concerne le point 2, l'utilisation de quatre propulseurs seulement pour assurer, même avec une panne, les corrections d'inclinaison (NORD-SUD) et de dérive (EST-OUEST) est aussi basée sur l'exploitation judicieuse de la propulsion électrique : grâce à son impulsion spécifique très supérieure à celle de la propulsion chimique (de 1500 à 3000 s contre typiquement 300 s), le budget d'ergol pour la correction de dérive devient négligeable (40 à 50 kg typiquement, contre 500 en propulsion chimique) et on peut se permettre de ne pousser qu'avec un seul propulseur au lieu de deux. Si les propulseurs sont adéquatement orientés, les couples perturbateurs résultants pourront être stockés momentanément dans de petites roues à réaction, désaturées plus tard grâce à l'action de couples externes faibles (voiles solaires, bobines magnétiques).

En ce qui concerne la possibilité de jouer par basculement sur l'inclinaison des ailes par rapport à l'axe de tangage, on peut noter les avantages suivants.

On peut donc se permettre la perte fonctionnelle de l'un quelconque des quatre propulseurs sans mettre en danger la mission. Sur les systèmes chimiques actuels, la perte fonctionnelle de l'un quelconque des douze (minimum) propulseurs oblige à condamner entièrement la branche correspondante (six propulseurs) et à ne fonctionner que sur l'autre branche redondante. Une deuxième panne signifie la fin de la mission en propulsion chimique mais seulement, grâce à l'invention, une réduction de la durée de la mission en propulsion électrique.

Pour ce qui est du point 3, les concepts, présentés récemment, d'utilisation de la propulsion électrique à bord de satellite géostationnaires, par exemple le satellite ARTEMIS de l'ESA, nécessitent des systèmes de repointage ("gimbal" en anglais) des propulseurs électriques de manière à les orienter au mieux pour diminuer les couples perturbateurs pendant les manoeuvres. Ces satellites utilisent en effet la propulsion chimique pour éliminer les moments cinétiques accumulés. Les poussées des propulseurs chimiques étant relativement élevées, les impulsions données doivent être très brêves pour ne pas perturber l'attitude du satellite. Cela diminue le rendement global de l'opération, car l'impulsion spécifique de propulseurs chimiques utilisés avec des impulsions de très courte durée (de l'ordre de la dizaine de millisecondes) est très faible. Pour ne pas être obligé d'embarquer des réserves d'ergol prohibitives, on essaye alors de supprimer la cause primaire, c'est-à-dire les bras de levier des couples perturbateurs, par réorientation en vol des propulseurs électriques.

Notre concept de satellite sans rigidité gyroscopique nominale, parfaitement inadapté à la propulsion chimique pendant les manoeuvres de contrôle d'orbite, est par contre adapté à une lente accumulation de moment cinétique pendant les manoeuvres et à un lent retour vers un moment cinétique global quasiment nul grâce à l'action de couples extérieurs faibles (voile solaire, couples magnétiques).

Selon d'autres dispositions préférées de l'invention, éventuellement combinées :
- certains au moins des propulseurs électriques sont des tuyères ioniques,
- certains au moins des propulseurs électriques sont des propulseurs à plasma,
- ce satellite comporte un système pour le contrôle d'attitude pendant la phase d'injection en orbite géostationnaire ou quasi-géostationnaire, qui est connecté à un même réservoir de mono-ergol que les propulseurs électriques,
- ce satellite comporte un système bi-ergols de propulsion et de contrôle d'attitude pour la phase d'injection en orbite géostationnaire ou quasi-géostationnaire,
- aussi bien le dispositif de commande en rotation que le dispositif de commande en basculement de chaque aile est commandé par le calculateur de bord pour générer des corrections d'attitude selon les trois axes, par utilisation de la pression de radiation solaire sur chaque aile.
- le calculateur de bord est adapté à commander des corrections d'attitude en lacet par les propulseurs électriques.

L'invention propose également un procédé de contrôle d'attitude d'un satellite en orbite ayant un axe de tangage sensiblement perpendiculaire au plan de l'orbite, comportant une surface destinée principalement à être soumise au rayonnement solaire et s'étendant à partir du satellite selon une direction donnée sensiblement parallèle à l'axe de tangage, un dispositif de mesure d'attitude et un calculateur adapté à déterminer la valeur d'un couple de correction d'attitude à appliquer en tangage, caractérisé en ce qu'on bascule ladite surface transversalement au rayonnement solaire en sorte de générer par interaction avec la pression de radiation solaire, un couple de tangage sensiblement égal au couple de correction d'attitude à appliquer en tangage.

Selon d'autres dispositions préférées de l'invention :
- préalablement à l'application d'une poussée de contrôle d'orbite selon une direction donnée de poussée, on estime l'amplitude et la direction de l'écart du centre de gravité du satellite à cette direction donnée de poussée à partir de perturbations d'attitude lors d'une manoeuvre d'orbite antérieure, et on bascule ladite surface, au moins en partie, parallèlement à un plan contenant la direction donnée selon laquelle s'étend la surface et la direction de l'écart en sorte de rapprocher le centre de gravité de ladite direction donnée de poussée,
- lors de chaque manoeuvre de contrôle d'orbite, on stabilise l'attitude du satellite par action sur un système à moment cinétique orientable puis, avant la manoeuvre de contrôle d'orbite suivante, on bascule ladite surface parallèlement au rayonnement solaire, en sorte de stabiliser le satellite en tangage et de ramener le moment cinétique orientable dans une orientation donnée par rapport au satellite.

Ainsi, dans le procédé de l'invention, on modifie latéralement (par translation transversale à l'axe de tangage) la position du centre de surface des panneaux solaires : de la sorte, la pression solaire provoque un couple en tangage qui permet de contrôler l'attitude, de désaturer la vitesse de la roue et/ou de compenser le couple perturbateur en tangage.

Le déplacement du générateur solaire peut être obtenu par tous types d'actionneurs connus appropries, lesquels ne font pas en soi l'objet du présent brevet.

L'intérêt de l'invention réside dans les avantages suivants :
- le pilotage en tangage obtenu ne modifie pas (ou de manière minime) le comportement en roulis/lacet du satellite, ce qui permet d'associer à ce pilotage en tangage tout type de pilotage roulis/lacet connu. En particulier, un pilotage également d'origine solaire utilisant les moteurs d'entraînement des ailes est particulièrement indiqué (voir notamment les demandes de brevet français 89-15732 et 89-17479 respectivement déposées les 29 Novembre et 29 Décembre 1989),
- le déplacement latéral des panneaux solaires entraîne un déplacement du centre de gravité du satellite permettant de l'aligner avec la poussée des moteurs NORD, SUD, EST, OUEST de contrôle d'orbite. Cela permet de diminuer très largement les perturbations roulis/lacet induites lors des manoeuvres de contrôle d'orbite NORD-SUD, et les perturbations en tangage lors des manoeuvres EST-OUEST,
- la masse additionnelle des actionneurs est compensée par l'économie d'ergol obtenue, grâce au renoncement à toute éjection de matière pour le contrôle d'attitude (au moins en tangage) et grâce à la minimisation des perturbations en roulis-lacet lors des manoeuvres de contrôle d'orbite,
- les actionneurs supplémentaires peuvent être utilisés en tant que redondance des moteurs classiques d'entraînement en rotation des ailes de générateur solaire lorsque l'on choisit la configuration où un moteur d'axe légèrement incliné est superposé au moteur d'entraînement ; cette redondance constitue un atout substantiel sur les solutions classiques où les moteurs d'entraînement constituent des points de panne unique,
- l'utilisation de ce concept permet de concevoir un satellite où l'emploi de tuyères à jet de gaz serait abandonné durant la vie orbitale, par exemple au profit de tuyères électriques (ioniques, à ionisation par arc électrique ou à plasma) dédiées au seul contrôle d'orbite. Un tel concept est avantageux :
   . par la précision de pointage permise par l'absence des perturbations dues aux jets des tuyères,
   . par le gain de masse d'ergol qu'il permet de réaliser grâce à la meilleure impulsion spécifique des tuyères électriques par rapport à celle des tuyères à jet de gaz.

Des objets, caractéristiques et avantages de l'invention ressortent de la description qui suit, donnée à titre d'exemple non limitatif, en regard des dessins annexés sur lesquels :
- la figure 1 est une vue schématique dans l'espace d'un véhicule spatial stabilisé autour de ses trois axes en train de décrire une orbite autour de la Terre,
- la figure 2 est un diagramme synoptique d'une logique de contrôle d'attitude d'un satellite conforme à l'invention, intégrant à titre d'exemple l'utilisation du pilotage roulis/lacet proposé dans la demande de brevet français FR-2.655.167 et l'utilisation d'un moment cinétique dont les trois composantes seraient commandables,
- la figure 2A est un schéma synoptique des éléments intervenant dans la mise en oeuvre de la logique de contrôle de la figure 2,
- la figure 3 est une vue schématique en perspective du satellite dans une configuration dans laquelle la pression solaire génère un couple de tangage, orienté suivant l'axe Y du satellite,
- les figures 4, 5 et 6 montrent trois dispositions de roues connues en soi, adaptées, pour la mise en oeuvre de la logique de la figure 2, à générer un moment cinétique dont les trois composantes sont commandables,
- la figure 7 est une vue de détail de la commande en mouvement d'un panneau solaire d'un satellite conforme à l'invention, utilisant un moteur tournant d'axe faiblement incliné vis à vis du moteur d'entraînement en rotation du panneau,
- la figure 8 en est une variante, utilisant un moteur de commande en pivotement d'axe transversal à l'axe du moteur d'entraînement,
- la figure 9 en est une autre variante, utilisant un triangle déformable articulé pour la liaison du panneau solaire au moteur d'entraînement,
- la figure 10 est une vue schématique de la configuration idéale d'un satellite idéal lors d'une manoeuvre de contrôle d'orbite,
- la figure 11 représente une configuration réelle d'un satellite réel,
- la figure 12 en représente une configuration réelle améliorée grâce à l'invention,
- la figure 13 est une vue en perspective à plus grande échelle du corps de satellite des figures 1 et 3,
- la figure 14 en est une vue en perspective selon la flèche XIV de la figure 13,
- la figure 15 est un schéma du circuit d'alimentation en ergol des propulseurs, et
- la figure 16 est un bloc diagramme du pilotage du satellite des figures 13 et 14.

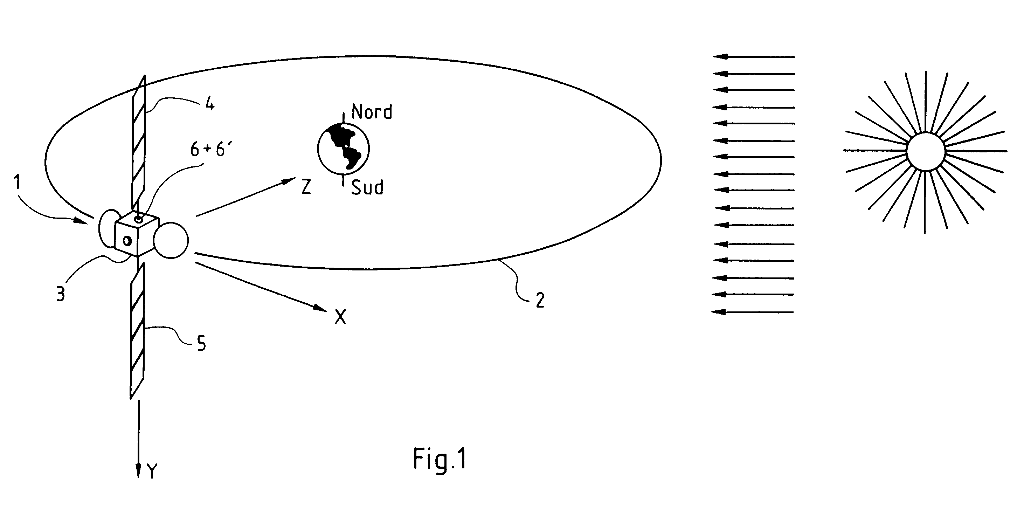

La figure 1 représente un satellite repéré 1 dans son ensemble, en train de décrire une orbite 2 circulaire autour de la Terre, par exemple de type géostationnaire et d'inclinaison égale au plus à 5°, par exemple 0,5°.

Ce satellite comporte un corps central 3 auquel sont associés trois axes définissant un repère de référence direct lié au satellite :
- un axe X tangeant à l'orbite 2 et de même sens que la vitesse de parcours de l'orbite : il est classiquement appelé axe de roulis,
- un axe Y perpendiculaire au plan de l'orbite 2 et orienté dans le sens NORD-SUD de la Terre : il est classiquement appelé axe de tangage,
- un axe Z perpendiculaire aux axes X et Y et orienté vers la Terre : il est classiquement appelé axe de lacet.

Sur certains satellites, ce système d'axes peut être orienté différemment par rapport à l'orbite et/ou la Terre en fonction des impératifs liés à la mission.

Ce satellite comporte un dispositif de contrôle de l'attitude (voir ci-dessous) grâce auquel il est stabilisé autour de ses trois axes.

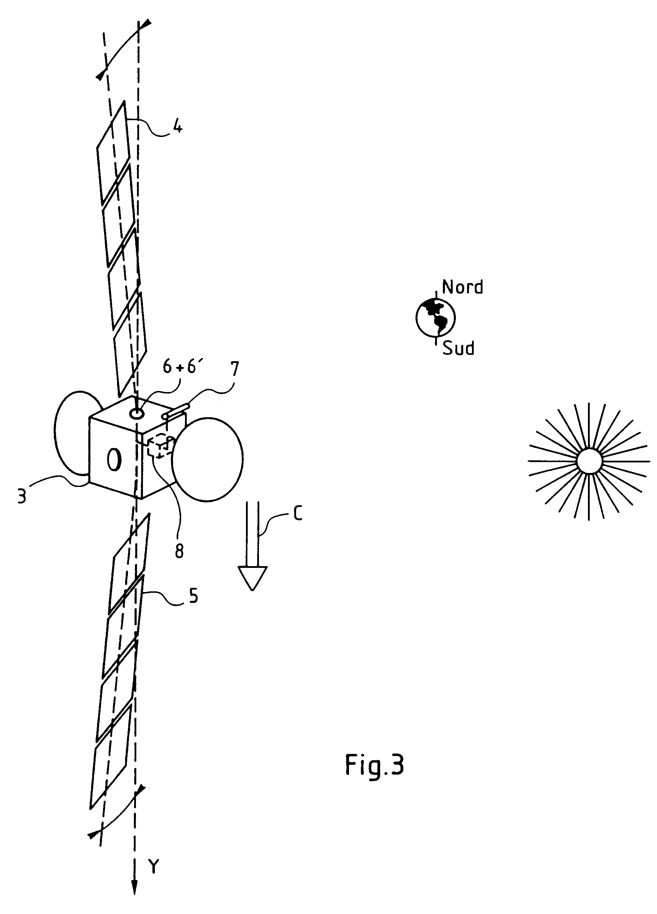

Ce satellite comporte ainsi un dispositif de mesure de l'attitude (classique en soi) relié à un circuit de traitement (également classique) qui permet de calculer les corrections que doit appliquer le dispositif de contrôle de l'attitude. Ce dispositif comprend de manière classique (voir figure 3) un détecteur terrestre 7 (par exemple de type à infrarouges) adapté le plus souvent à mesurer l'attitude en roulis et en tangage. Il peut également comprendre des détecteurs solaires, voire stellaires, (non représentés), pour mesurer si nécessaire, notamment l'attitude en lacet. Le circuit de traitement fait en pratique partie d'un calculateur de bord 8, schématisé en pointillés à la figure 3.

De manière également classique, ce satellite comporte un générateur solaire comportant deux ailes 4 et 5 s'étendant respectivement vers le NORD et vers le SUD suivant des axes longitudinaux, ici confondus avec l'axe Y, et orientables par rapport au corps 3, autour d'axes de rotation au moins approximativement confondus avec l'axe Y, sous l'action de deux moteurs d'entraînement commandables séparément, de tout type connu approprié dont l'un porté par la face NORD est désigné par la référence 6 au sein de l'ensemble 6 + 6' de la figure 3 ; ces moteurs sont normalement destinés à maintenir ces ailes sensiblement en regard du Soleil, perpendiculairement à ses rayons.

Sur certains satellites, le générateur solaire peut n'être composé que d'une seule aile portée par la face NORD ou SUD. Dans ce cas, le satellite peut aussi comporter une voile solaire sur la face opposée (orientable ou symétrique autour d'un axe parallèle à Y) dont le rôle est de rééquilibrer l'ensemble du satellite du point de vue de la position du centre de gravité et de celle du centre de poussée moyen de la pression solaire. Ce type de configurations ne porte pas préjudice à la possibilité d'utiliser la présente invention. Il peut de même y avoir plus de deux ailes ou voiles parallèles à l'axe de tangage.

Dans le présent document, on désigne sous le terme "générateur solaire" l'ensemble d une ou deux ailes (voire plus), étant précisé que le terme "aile de générateur solaire" désigne les ensembles qui peuvent être orientés par les moteurs d'entraînement, c'est-à-dire les ensembles constitués par :
- le générateur solaire proprement dit, c'est-à-dire l'ensemble des cellules convertissant l'énergie lumineuse en énergie électrique, par exemple, par effet photovoltaïque,
- la structure qui porte l'ensemble de ces éléments,
- les mécanismes liés à cette structure qui permettent de la maintenir stockée avant que le satellite n'atteigne sa position orbitale, de la déployer et de la maintenir déployée,
- tous les éléments additionnels qui, en configuration orbitale, sont fixés à cette structure et dont les rôles sont divers. On peut citer par exemple des volets de protection thermique qui permettent de limiter les pertes thermiques du satellite durant les phases où le générateur solaire n'est pas déployé, ou des surfaces qui permettent d'améliorer le flux lumineux reçu par les éléments photovoltaïques (par exemple écrans d'uniformisation d'ombre).

Dans certains cas, les radiateurs déployables dont peut être équipé le satellite, peuvent être utilisés en tant que surfaces exposées à la pression solaire.

En pratique, le satellite comporte également divers appendices (tels qu'antennes...) fixes ou à peu près fixes dont l'exposition à la pression solaire, provoque des couples perturbateurs qui s'ajoutent à ceux résultant d'une éventuelle dissymétrie du générateur solaire. C'est ainsi que les satellites de télécommunication comportent généralement une ou plusieurs antennes de transmission : la pression du radiation du faisceau de transmission entraîne un couple perturbateur autour de Y qui s'ajoute à ceux précédemment cités.

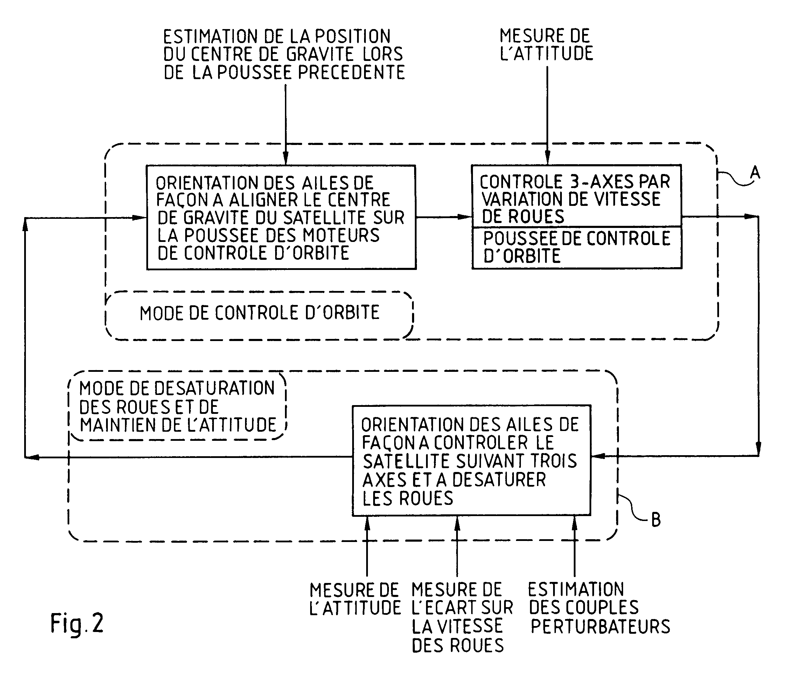

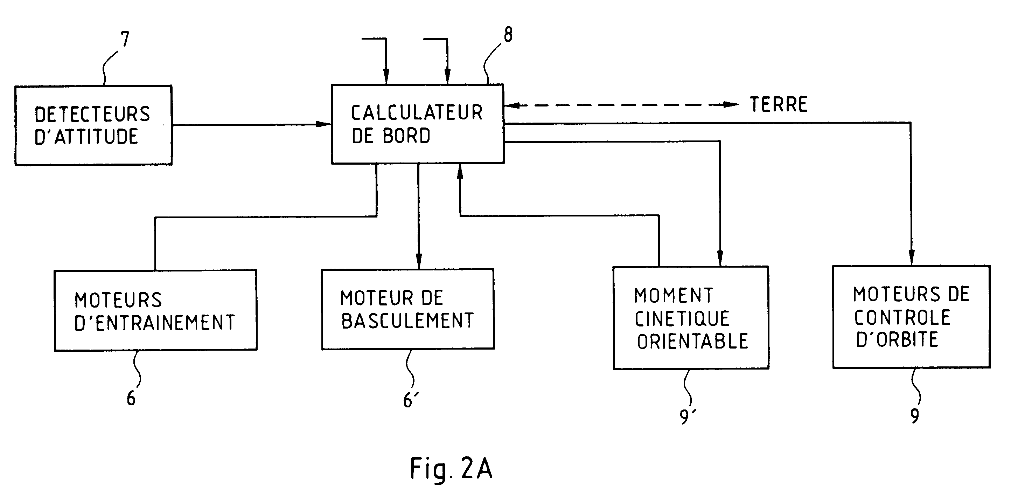

De manière également classique le satellite comporte des moteurs de contrôle d'orbite par exemple de type chimique (notés 9 à la figure 2A) dont le rôle est de ramener à intervalle régulier le satellite à sa position nominale dans l'espace. Ce dispositif est rendu nécessaire par la tendance qu'a tout objet en orbite à s'éloigner de son orbite initiale sous l'effet des perturbations diverses, (ainsi notamment pour les satellites géostationnaires, l'attraction de la Lune et du Soleil provoque une inclinaison indésirable de l'orbite tandis que l'anisotropie de la sphère terrestre provoque une dérive vers l'EST ou l'OUEST de la position apparente vis à vis de la Terre du satellite. Dans tous les cas ce système est devenu nécessaire pour modifier l'orbite du satellite lorsque cela est demandé par sa mission, ne serait-ce qu'en fin de vie, pour l'injection en orbite cimetière.

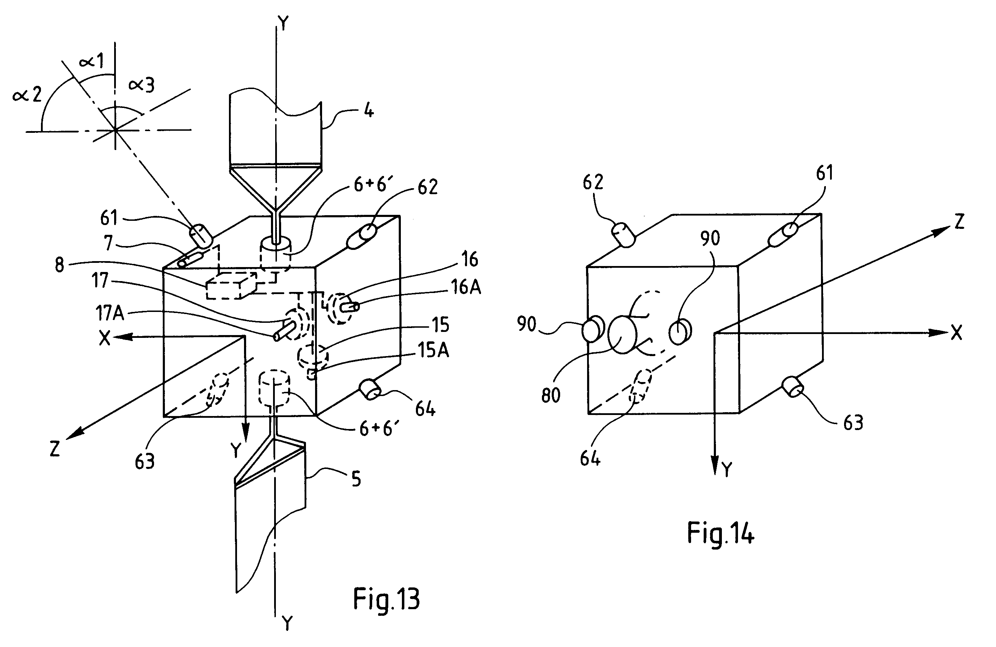

Selon un autre aspect de l'invention qui sera explicité à propos des figures 13 et 14, ce système comporte exclusivement des moteurs électriques ; ce sera précisé plus loin.

Le satellite 1 est muni d'un moyen de contrôle d'attitude en tangage qui est compatible avec tout autre moyen connu de contrôle du satellite en roulis et lacet, notamment solaire, par exemple d'un type décrit dans l'un des documents déjà cités : les demandes de brevet français FR-2.655.167 et FR-2.656.586, ou les documents FR-2.531.547, FR-2.530.046 ou US-4.325.124. Ainsi que cela apparaît ci-dessous, ce contrôle en tangage est en effet découplé vis à vis du contrôle d'attitude en roulis/lacet.

En outre, la présente invention respecte en particulier la philosophie sous-tendant les enseignements des demandes de brevet visées ci-dessus, incorporées par référence, qui consiste à ne rajouter que le minimum d'éléments au satellite, voire pas du tout.

Couplée à un dispositif de même nature que ceux ci-dessus, la présente invention permet d'obtenir grâce à la pression de radiation solaire un contrôle du satellite autour de ses trois axes.

Ainsi que cela ressort de la figure 3, le couple de contrôle en tangage est obtenu par un basculement contrôlé transversalement au rayonnement solaire de l'une au moins des deux ailes du générateur solaire (et/ou de la voile solaire de rééquilibrage si le satellite n'a qu'une aile). Ce basculement entraîne un déplacement du centre de poussée solaire par rapport à l'axe de tangage Y, et donc génère un couple de tangage.

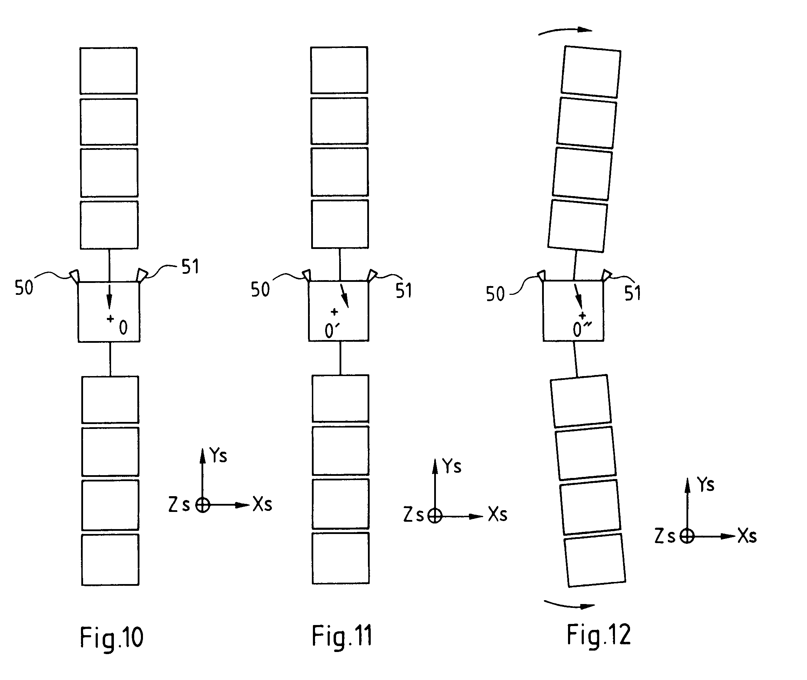

Lors des manoeuvres de contrôle d'orbite, ce basculement peut aussi être utilisé pour déplacer le centre de gravité des ailes, et donc le centre de gravité du satellite dans son ensemble. Le centre de gravité du satellite peut ainsi être amené à volonté, si nécessaire, sur l'axe du vecteur poussée des moteurs 9 de contrôle NORD-SUD, voire EST-OUEST, ce qui a pour effet de minimiser (voire d'annuler) les perturbations roulis et lacet dues à ce contrôle d'orbite (voir ci-dessous à propos des figures 10, 11 et 12). Dans la pratique, ces couples perturbateurs ne sont pas toujours totalement annulés mais au moins fortement diminués, permettant ainsi de confier le contrôle d'attitude roulis/lacet durant ces manoeuvres à des actionneurs 9' (tels que des roues à réaction) moins puissants donc moins coûteux en masse que des roues à inertie et qui excitent moins les modes souple et de nutation du satellite : la précision de pointage en sera donc améliorée.

La commande de positionnement du centre de gravité peut être déterminée à partir de l'identification (soit automatiquement, soit par analyse au sol) des perturbations enregistrées au cours des manoeuvres précédentes. Durant ces manoeuvres, le couple de tangage généré par la pression solaire est évidemment négligeable devant les couples perturbateurs générés par les manoeuvres de correction d'orbite et devant l'action des actionneurs destinés à leur compensation ; le contrôle du tangage par basculement cesse donc d'être opérationnel, d'autant que le déplacement du centre de gravité vers l'axe du vecteur poussée peut, dans certains cas, au lieu de corriger l'attitude en tangage, introduire un couple perturbateur supplémentaire. Un autre moyen de contrôle en tangage doit donc être mis en oeuvre, par exemple par variation de vitesse d'une roue que l'on désature par la suite, en attendant la manoeuvre suivante de contrôle d'orbite.

Cela est représenté à la figure 2 qui schématise les deux modes qui alternent.

En mode de contrôle d'orbite (cadre A), on déplace le centre de gravité, à partir de sa position estimée d'après la manoeuvre précédente, vers l'axe du vecteur poussée des moteurs d'orbite. Ensuite, à partir de mesures de l'attitude instantanée, on agit sur un système à moment cinétique commandable 9' (voir la figure 2A) pendant que la poussée de contrôle d'orbite est appliquée.

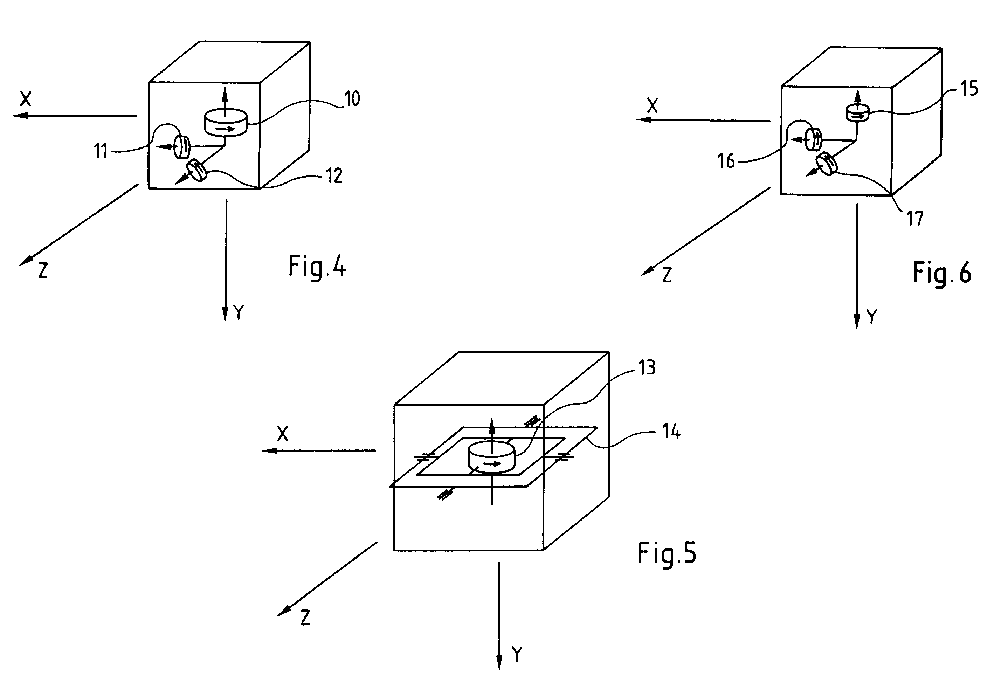

Les figures 4 à 6 présentent divers systèmes à moments cinétiques commandables connus adaptés à constituer le système 9': ils comportent soit une roue cinétique 10 en tangage et deux roues à réaction 11 et 12 selon deux axes du plan roulis/lacet, soit une roue cinétique 13 en tangage montée sur un double pivot noté 14 dans son ensemble, soit trois roues à réaction 15, 16 et 17 orientées sur l'axe de tangage et deux axes du plan roulis/lacet. Bien sûr les axes choisis dans le plan roulis/lacet peuvent être les axes de roulis et de lacet. Cette dernière variante ne présente aucune rigidité gyroscopique.

En mode de contrôle d'attitude (cadre B), à partir des mesures d'attitude, d'une estimation des couples perturbateurs et de mesures de l'écart de moment cinétique encore à compenser suite à la précédente manoeuvre de contrôle d'orbite, on commande un basculement des ailes propre à maintenir l'attitude du satellite et à désaturer les roues.

La mise en oeuvre de la logique de contrôle de cette figure 2 pour déterminer l'amplitude du basculement à appliquer aux ailes est à la portée de l'homme de métier.

La figure 2A décrit de manière schématique les éléments intervenant dans la mise en oeuvre de cette logique de contrôle : le calculateur de bord 8 agissant sur les moteurs d'entraînement 6, le(s) moteur(s) de basculement 6', le système à moment cinétique commandable orientable 9' et les moteurs de contrôle d'orbite 9, en fonction de divers signaux provenant de manière connue des détecteurs d'attitude (dont le détecteur 7), du système à moment cinétique orientable 9', voire reçus d'autres éléments du satellité ou envoyés par la Terre.

Dans ce qui précède, on considère l'attitude aussi bien en tangage qu'en roulis et lacet ; le contrôle en roulis et lacet étant avantageusement effectué conformément à la demande FR-2.655.167 déjà citée et incorporée par référence.

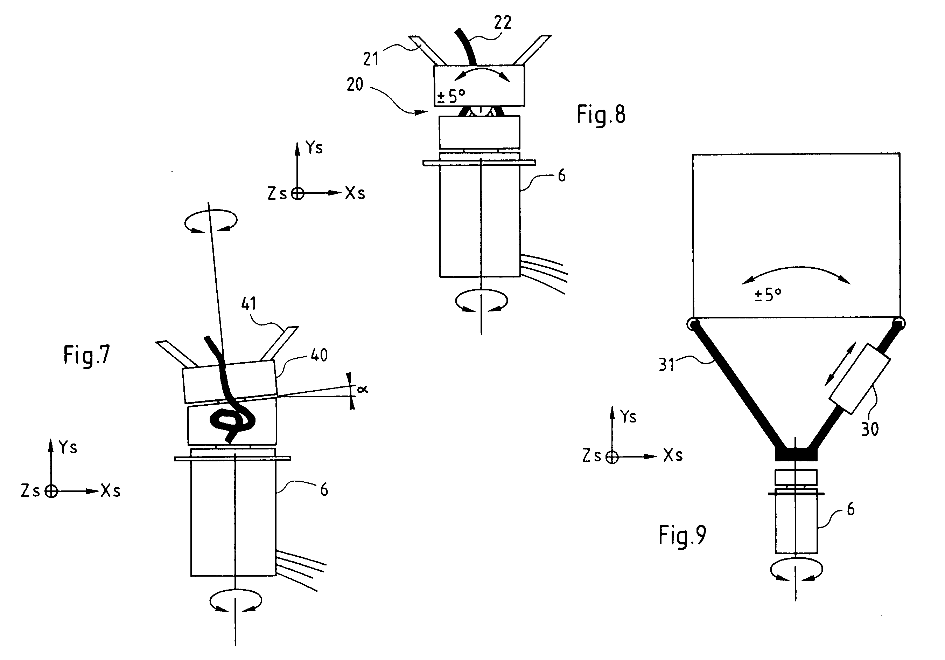

Le basculement de l'aile (ou de la voile) parallèlement à son plan peut être obtenu (entre autres solutions possibles) par un moteur 6' décrit par l'une quelconque des figures 7 à 9 :
- soit par un moteur 20 d'orientation à axe perpendiculaire au plan des panneaux, ce moteur étant rajouté entre le moteur 6 d'entraînement classique des ailes et le bras d'éloignement 21 desdits panneaux (voir figure 8) ; le débattement angulaire est par exemple de ± 5° de part et d'autre de l'axe du moteur 6. La référence 22 représente un tronçon du câble de transmission de la puissance venant du générateur solaire ;
- soit par un moteur à déplacement linéaire 30 (par exemple de type vis sans fin à billes et crémaillère) situé sur une ou plusieurs des barres du bras d'éloignement 31 du générateur solaire (voir figure 9) ; ce bras est alors déformable ;
- soit, et c'est la solution préférée, par l'adjonction d'un deuxième moteur 40 éventuellement identique au moteur d'entraînement de l'aile. Ce moteur est d'axe légèrement incliné (angle α par exemple voisin de 5°) par rapport à celui du moteur d'entraînement (voir figure 7). Dans ce cas, le basculement de l'aile (dont le bras d'éloignement est représenté partiellement en 41) est obtenu par la rotation conjointe des deux moteurs, l'axe longitudinal de l'aile pouvant décrire un cône autour de l'axe de rotation du moteur 6 d'entraînement de l'aile tout en restant sensiblement face à une direction donnée.

Cette dernière solution présente de nombreux avantages, en particulier :
- elle permet avec un seul moteur supplémentaire un déplacement du centre de gravité suivant n'importe quelle direction d'un plan parallèle au plan XZ, ce qui permet non seulement un alignement du centre de gravité sur l'axe NORD-SUD en cas de manoeuvre NORD-SUD de contrôle d'orbite, mais en outre un rapprochement du centre de gravité vers l'axe EST-OUEST lors des manoeuvres EST-OUEST de contrôle d'orbite ;
- elle s'encastre aisément dans la caisse du satellite, facilitant ainsi l'aménagement du générateur solaire qui n'a pas à être surélevé pour laisser la place aux mécanismes supplémentaires ;
- en cas de panne de l'un des moteurs classiques d'entraînement du générateur solaire, elle offre une redondance correcte grâce à l'ajout de ce moteur d'axe légèrement incliné. Dans cette éventualité, le pilotage en tangage et le positionnement du centre de gravité voient leur efficacité réduite de moitié. Cependant, le satellite est épargné vis à vis des graves conséquences de la perte d'un moteur d'entraînement sur les satellites traditionnels.

Les axes Xₛ, Yₛ et Zₛ sont le système d'axes lié au satellite.

La figure 10 représente le cas idéal où le centre de gravité O est exactement dans la position voulue, et l'axe du vecteur poussée des moteurs de poussée NORD-SUD 50 et 51 passe par cette position voulue. Dans ce cas idéal, une manoeuvre de contrôle d'orbite NORD-SUD n'induit directement aucun couple perturbateur.

En réalité, le centre de gravité O' est décalé par rapport à sa position voulue, tandis que l'axe du vecteur poussée des moteurs 50 et 51 ne passe pas exactement par cette position voulue (figure 11). Pour minimiser les couples perturbateurs, l'invention enseigne donc de déplacer le centre de gravité réel vers l'axe de poussée (position O'' à la figure 12).

Ainsi, sur un satellite selon la présente invention, il est possible d'abandonner l'utilisation des traditionnelles tuyères à jets de gaz :
- pour le contrôle d'attitude à poste en dehors des manoeuvres de contrôle d'orbite,
- également durant les manoeuvres de contrôle d'orbite, la diminution des perturbations autorisant un contrôle d'attitude par un moyen moins puissant, par exemple par des roues cinétiques ou à réaction. Le moment cinétique emmagasiné dans ces roues peut ensuite être facilement désaturé par le contrôle d'attitude solaire qui agit en dehors des manoeuvres de contrôle d'orbite.
On appréciera que :
- le basculement d'une ou plusieurs ailes du générateur solaire (ou de la voile opposée au générateur solaire si celui-ci est dissymétrique) peut être utilisé, soit pour créer un couple de contrôle en tangage par l'effet de la pression de radiation solaire sur les ailes du générateur solaire (ou de la voile solaire), soit durant les manoeuvres de contrôle d'orbite pour positionner le centre de gravité du satellite de façon à minimiser les perturbations liées aux écarts qui existent entre ce centre de gravité et le vecteur poussée réelle des moteurs de contrôle d'orbite, ces deux utilisations pouvant être utilisées isolément ou conjointement sur le même satellite ;
- le basculement obtenu par tout type d'actionneur connu, autorise l'utilisation de la pression solaire sur les ailes du générateur solaire pour le contrôle en roulis et en lacet par tout procédé connu et ne relevant pas de la présente invention ;
- le basculement (jusqu'à ± 15°) peut être obtenu suivant deux directions du plan roulis/lacet lorsqu'on choisit un actionneur en rotation d'axe légèrement incliné par rapport à l'axe du moteur d'entraînement des ailes du générateur solaire (le basculement est obtenu par la rotation différentielle des deux moteurs : le moteur d'entraînement proprement dit et le moteur additionnel ;
- l'angle formé par les axes des deux moteurs est compris entre 2° et 15° ;
- il est prévu d'utiliser le deuxième moteur en tant que redondance du moteur d'entraînement de l'aile s'il est défaillant ;
- le basculement (jusqu'à ± 15°) peut être obtenu suivant une direction par un actionneur en translation situé sur une ou plusieurs des barres du bras d'éloignement de l'aile du générateur solaire ;
- le basculement peut aussi être obtenu suivant une direction par un actionneur en rotation d'axe au moins approximativement perpendiculaire au plan des ailes du générateur solaire ;
- en variante non représentée, le basculement peut être obtenu suivant deux directions par deux actionneurs en rotation d'axes différents au moins approximativement perpendiculaires à l'axe du moteur d'entraînement des ailes du générateur solaire ;
- le contrôle d'attitude suivant au moins l'un des axes roulis, tangage et lacet est assuré totalement ou en partie par un système faisant intervenir la pression solaire sur des surfaces liées au satellite ;
- en variante non représentée, le contrôle d'attitude suivant au moins l'un des axes roulis, tangage et lacet est assuré totalement ou en partie par un système faisant intervenir un dipôle magnétique embarqué à bord du satellite ;
- le contrôle d'attitude suivant au moins l'un des axes roulis, tangage et lacet est assuré totalement ou en partie par un système faisant intervenir la variation d'une au moins des composantes du moment cinétique embarqué à bord du satellite ;
- le contrôle d'attitude durant les manoeuvres de contrôle d'orbite est assuré par la variation des trois composantes d'un moment cinétique embarqué, et par la minimisation des perturbations obtenues par l'invention ;
- le contrôle d'attitude en dehors des manoeuvres de contrôle d'orbite est assuré par la pression solaire (aidé eventuellement - variante non représentée - de dipôles magnétiques) ;
- selon une autre variante non représentée, le contrôle d'attitude en dehors des manoeuvres de contrôle d'orbite est assuré par des dipôles magnétiques (aidé éventuellement de la pression solaire) ;
- le contrôle d'attitude en dehors des manoeuvres de contrôle d'orbite est utilisé pour rapprocher d'une valeur de consigne les composantes du moment cinétique embarqué.
- le satellite est géostationnaire ;
- tout ou partie des moteurs de contrôle d'orbite sont de faible poussée (< 1 Newton) ;
- tout ou partie des moteurs de contrôle d'orbite sont de type ionique ;
- tout ou partie des moteurs de contrôle d'orbite sont de type à ionisation par arc électrique ;
- tout ou partie des actionneurs de contrôle d'orbite sont des surfaces orientables exposées à la pression solaire.

La suite de la description, en regard des figures 13 à 16 concerne le cas où le système de propulsion pour le contrôle d'orbite et d'attitude, en phase opérationnelle, est dépourvu de tout propulseur chimique. Il ne subit donc pas les inconvénients inhérents à la propulsion chimique (risques de fuite, variations brutales d'attitude et/ou possible génération de vibrations). Par contre, on tire parti de la très bonne impulsion spécifique des tuyères électriques (de 5 à 10 fois plus élevée que pour les tuyères chimiques classiques).

Dans une configuration minimale, ce système de propulsion électrique repéré 60 dans son ensemble est constitué de seulement deux propulseurs 61 et 62 (ou 63 et 64) disposés sensiblement symétriquement par rapport au plan des axes Y et Z, avec une inclinaison α1 d'environ 40° par rapport à l'axe de tangage. De manière générale cet angle α1 est compris entre 15° et 65° en valeur absolue (c'est-à-dire son cosinus est, en valeur absolue, compris entre 0,43 et 0,97) tandis que le cosinus de l'inclinaison α2 de ces propulseurs par rapport à l'axe de roulis est, en valeur absolue, compris entre 0,25 et 0,75 (angle compris, en valeur absolue, entre 40° et 75°).

De manière préférée, ces propulseurs sont perpendiculaires à l'axe de lacet. Toutefois des contraintes d'implantation peuvent amener à choisir pour ces propulseurs une inclinaison α3 par rapport à l'axe de lacet dont le cosinus vaille entre -0,35 et 0,35 (angle compris entre 70° et 110°).

De manière avantageuse, ces propulseurs sensiblement disposés auprès des arêtes du corps de satellite qui bordent une même face (ici la face NORD pour les propulseurs 61 et 62) parallèlement à Z ; de préférence, ces propulseurs sont au milieu de ces arêtes.

Une telle paire de propulseurs suffit, tant qu'il n'y a pas de pannes, pour effectuer des corrections d'orbite EST-OUEST (en même temps que sont générées, il est vrai, des poussées parallèles à Y) et les corrections d'orbite nécessaires parallèlement à l'axe Y (le besoin d'une poussée vers le SUD est satisfait par une poussée vers le NORD effectuée une demi-orbite plus tard).

Toutefois, le système de propulsion 60 comporte avantageusement une seconde paire de propulseurs électriques 63 et 64 disposés auprès de la face opposée (face SUD), chacun sensiblement symétrique de l'autre par rapport au plan YZ ; de manière préférée, les deux paires de propulseurs sont symétriques l'une de l'autre par rapport au plan XZ.

Un tel système de propulsion à seulement quatre propulseurs électriques 61 à 64 permet, même en cas de panne de l'un d'entre eux, d'effectuer toutes les opérations nécessaires de correction d'orbite (en utilisant autant que possible ces propulseurs par paires).

Il est toutefois possible, sans sortir du cadre de l'invention, de mettre un nombre supérieur de propulseurs électriques si l'on veut renforcer encore la fiabilité.

En principe, ces propulseurs 61 à 64 ont une orientation fixe par rapport au corps ; on peut toutefois, dans une version sophistiquée, prévoir de les rendre orientables, mais cela augmente la masse et affaiblit la fiabilité.

Ce satellite comporte un système de stockage d'énergie cinétique sans rigidité gyroscopique, formé par les roues à réaction 15 à 17 de la figure 6, qui sert au stockage momentané d'un moment cinétique global autour d'un axe quelconque. Il leur est en pratique associé des capteurs de vitesse schématisés en 15A, 16A et 17A, adaptés à fournir notamment un signal de vitesse angulaire en tangage.

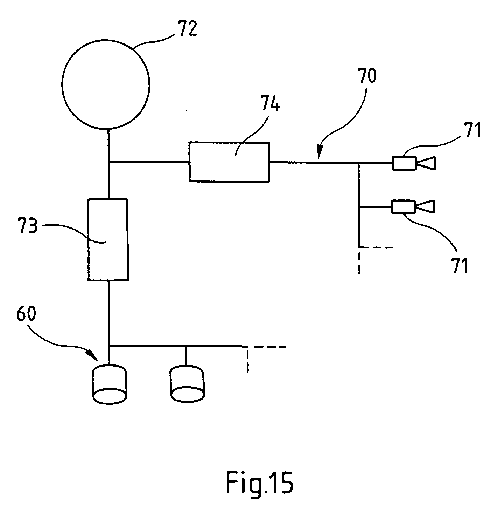

En fait, le satellite circule sur son orbite de transfert (avant la mise à poste sur son orbite opérationnelle) dans une configuration et une orientation différentes de celles qu'il adopte ensuite, ce qui amène à prévoir un système spécifique de contrôle d'attitude (non représenté aux figures 13 et 14) pour cette phase d'injection ; ainsi que cela ressort de la figure 15, ce système repéré 70 utilise avantageusement des tuyères 71 (représentées aux figures 11 et 12) utilisant le même mono-ergol que les tuyères électriques du système 60 ; ces diverses tuyères sont alimentées à partir du réservoir de stockage 72 à travers des systèmes 73 et 74 de régulation de pression et de débit de tout type connu approprie.

Ce satellite comporte en variante non représentée, un système bi-ergols pour la propulsion et le contrôle d'attitude pour la phase d'injection en orbite opérationnelle (géostationnaire ou non).

Dans l'exemple représenté (voir la figure 14) le satellite est muni sur sa face -Z d'un système de propulsion 80 pour l'injection en orbite géostationnaire ; il peut être à carburant solide.

Le système de propulsion électrique 60 peut participer à l'injection en orbite opérationnelle, géostationnaire ou non.

Pour cette phase d'injection, le satellite de la figure 14 peut comporter en outre un système additionnel de propulsion électrique comportant ici deux tuyères électriques 90 parallèles à l'axe -Z.

La réduction momentanée à zéro du moment cinétique accumulé par les roues à réaction en orbite opérationnelle, géostationnaire ou non, se fait de préférence (voir ci-dessus), suivant les trois axes X, Y et Z, par utilisation de la pression de radiation solaire sur les ailes, en combinant les actions sur les moteurs 6 et 6'.

En variante des corrections d'attitude en roulis et en lacet peuvent être générées grâce à des boucles magnétiques interagissant avec le champ magnétique terrestre.

Bien entendu la réduction à zéro de la composante du moment cinétique instantanée est aisément obtenue grâce aux propulseurs électriques 61-64 (il suffit d'une différence de durée de poussée entre deux propulseurs devant agir simultanément).

Bien que dans ce qui précède il ait été considéré comme particulièrement intéressant de ne pas avoir de rigidité gyroscopique il doit bien être compris que l'invention se généralise au cas d'un moment cinétique ayant une composante en permanence non nulle, par exemple selon l'axe Y (avec donc une roue d'inertie à moment cinétique en permanence non nul selon cet axe Y, conformément aux figures 4 et 5 par exemple).

Le nombre de roues peut être avantageusement supérieur à 3 pour des raisons de redondance.

A titre d'exemple de réalisation, le satellite représenté est un satellite de télécommunication de 3000 kg au lancement, avec de grands générateurs solaires de 80 m², prévus pour fournir 10 kW en fin de vie, c'est-à-dire quinze ans.

Quatre propulseurs ioniques (tels que ceux fournis par MESSERSCHMITT-BOLKOW-BLOHM (MBB) de poussée 100 Millinewton sont placés dans le plan XY, avec un biais de 60° par rapport à l'axe Y. Cette configuration a l'avantage d'assurer un bon rendement pour les poussées NORD ou SUD, et permet également de limiter le couple perturbateur autour de Z à une valeur acceptable par les roues à réaction, en cas de fonctionnement dégradé avec un propulseur en panne. Les roues à réaction au nombre de trois, ont une capacité de ± 15 Nms. Leur mécanique est à base de paliers magnétiques, sans aucun frottement, et seule la partie électrique est redondée, à l'intérieur de chaque roue.

Les générateurs solaires sont orientés sur le Soleil en permanence grâce au dispositif 6 + 6' qui en assure, par jour, un tour du générateur par rapport au satellite et permet également d'incliner de plusieurs degrés (par exemple 7°) l'axe longitudinal du générateur solaire par rapport à l'axe Y du satellite. Ces deux mouvements judicieusement pilotés par le calculateur de bord permettent de désaturer les roues à réaction, c est-à-dire de les ralentir en créant les couples solaires nécessaires. Il s'agit d'un pilotage solaire sur les trois axes du satellite.

Les mouvements d'orbite ont lieu deux fois par jour, pendant environ une heure, la puissance électrique nécessaire de l'ordre de 1,5 kW est fournie par une batterie, qui se recharge entre deux manoeuvres.

Ce concept de contrôle fin (sans moment cinétique, ni jets de tuyères chimiques) est tel que toute panne ne peut produire que des dérives très lentes du satellite, donc aisément observables et rapidement compensées en commutant la partie défaillante sur sa redondance. Les durées de dépointages sont donc minimisées et la mission est garantie en permanence, ce qui est un avantage fondamental.

Un ensemble de tuyères chimiques n'est utilisé nominalement que pour l'orbite de transfert. Quatre tuyères chimiques suffisent, mais huit tuyères (non représentées) sont nécessaires pour parer à toute panne. Elles sont regroupées sur la face antiterre, autour du moteur d'apogée. Après les premières semaines de vie du satellite, ces tuyères sont isolées par des électrovannes ce qui supprime tout risque de fuite, et présente un avantage considérable :
- pas d'interventions urgentes des stations de contrôle, toujours délicates en cas de fuite de propergol,
- pas de risque de modification thermique due aux conséquences d'évaporation en cas de fuite,
- pas de risque de réduction de durée de vie, suite à une perte de propergol.

Dans des cas tout à fait exceptionnels de pannes multiples, il est prévu d'ouvrir les électrovannes pour piloter le satellite, pointé sur le Soleil, en mode dit de survie, en attendant les décisions des experts, qui conduirait au retour à un pilotage solaire, tuyères chimiques fermées à nouveau.

Un bilan de masse associé aux quatre propulseurs et à leur combustible, comparé à celui d'un système classique à 12 propulseurs chimiques fait apparaître un gain de 800 Kg environ. En effet, pour un satellite de quatre tonnes au lancement, et de durée de vie de quinze ans, le supplément de masse sèche est de 70 Kg pour les propulseurs électriques, mais le gain de fuel [(propulsion chimique) - (propulsion au Xénon)] est de 900 Kg.

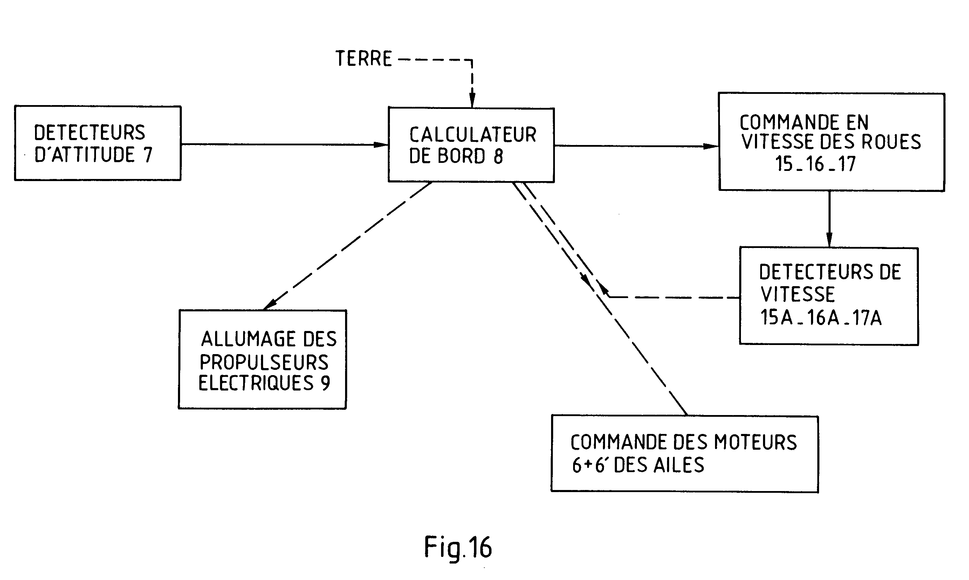

Le bloc diagramme du pilotage est donné à la figure 16. Il est très similaire aux enseignements des figures 2 et 2A.

On appréciera que l'invention propose ici une combinaison originale d'éléments connus en soi et déjà éprouvés en orbite depuis de nombreuses années :
- roues à palier magnétique (satellites SPOT)
- dispositif de rotation des générateurs solaires (tous les satellites géosynchrones).

Il va de soi que la description qui précède n'a été proposée qu'à titre d'exemple non limitatif et que de nombreuses variantes peuvent être proposées par l'homme de l'art sans sortir du cadre de l'invention. Ainsi, très généralement, l'invention s'applique à tout satellite muni d'au moins une surface destinée principalement à être soumise au rayonnement solaire et s'étendant à partir du satellite selon une direction donnée. En outre, l'ordre des moteurs d'entraînement et de basculement peut être inversé, le moteur d'entraînement étant situé entre le moteur de commande en basculement et l'aile de générateur solaire. En particulier, le débattement des moteurs de basculement peut être augmenté sans modifier le principe de l'invention.

L'invention s'applique également à tout satellite dont les calculs nécessaires, en tout ou en partie, seraient effectués au sol.

## Revendications

1. Satellite stabilisé 3-axes décrivant une orbite, comportant un corps (3) ayant un axe de tangage sensiblement perpendiculaire au plan de l'orbite et comportant au moins une surface (4, 5) destinée principalement à être soumise au rayonnement solaire et s'étendant à partir du corps selon une direction donnée sensiblement parallèle à l'axe de tangage, un calculateur de bord (8) et, connectés à ce dernier, un système (7) de détection d'attitude adapté à détecter l'attitude du corps au moins autour de l'axe de tangage, des moyens actifs de contrôle d'attitude adaptés à appliquer des couples de correction d'attitude au moins en tangage, et des moyens de contrôle d'orbite (9, 60) adaptés à appliquer au satellite des poussées selon des axes de poussée, caractérisé en ce que ces moyens de contrôle d'attitude en tangage comportent des moyens de commande en basculement (6', 20, 30, 40), entre cette surface et le corps, adaptés à commander en basculement cette surface sensiblement transversalement au rayonnement solaire avec une amplitude ajustée par le calculateur de bord, avec ou sans intervention du sol, en sorte de générer, par interaction de cette surface avec la pression de radiation solaire, lesdits couples de correction d'attitude en tangage.

2. Satellite selon la revendication 1, caractérisé en ce que ladite surface destinée principalement à être soumise au rayonnement solaire est une aile plane de générateur solaire (4, 5) s'étendant selon la direction donnée et connectée au satellite par un moteur d'entraînement (6) adapté à faire tourner cette aile autour de ladite direction donnée.

3. Satellite selon la revendication 2, caractérisé en ce que les moyens de commande en basculement comporte ce moteur d'entraînement et un second moteur (20, 30, 40) situé entre ce moteur d'entraînement et l'aile de générateur solaire.

4. Satellite selon la revendication 3, caractérisé en ce que ce second moteur est un moteur rotatif (40) d'axe incliné selon un angle non nul (α) par rapport à cette direction donnée.

5. Satellite selon la revendication 4, caractérisé en ce que cet angle non nul est compris entre 2° et 15°.

6. Satellite selon l'une quelconque des revendications 1 à 3, caractérisé en ce que les moyens de commande en basculement comportent un moteur de commande en pivotement (30) d'axe transversal à cette direction donnée.

7. Satellite selon la revendication 6, caractérisé en ce que ce moteur (30) admet un débattement d'au plus 15° par rapport à cette direction donnée.

8. Satellite selon la revendication 6 ou la revendication 7, caractérisé en ce que les moyens de basculement comportent un second moteur de commande en pivotement d'axe transversal à cette direction donnée présentant une inclinaison non nulle avec l'axe du premier moteur de pivotement.

9. Satellite selon l'une quelconque des revendications 1 à 3, caractérisé en ce que les moyens de commande de basculement comportent un moteur linéaire (40) s'étendant suivant une direction inclinée par rapport à la direction donnée et monte sur un côté d'un triangle articulé déformable reliant ladite surface au satellite.

10. Satellite selon l'une quelconque des revendications 1 à 9, caractérisé en ce que les moyens de contrôle d'orbite comportent des tuyères électriques (61-64).

11. Satellite selon l'une quelconque des revendications 1 à 9, caractérisé en ce que les moyens de contrôle d'orbite comportent des tuyères à ionisation par arc électrique.

12. Satellite selon l'une quelconque des revendications 1 à 11, caractérisé en ce que les moyens de contrôle d'attitude durant les manoeuvres de contrôle d'orbite comportent cette surface et les moyens de commande en basculement.

13. Satellite selon l'une quelconque des revendications 1 à 12, caractérisé en ce que les moyens de contrôle d'attitude durant les manoeuvres de contrôle d'orbite comportent un système à moment cinétique orientable (9').

14. Satellite destiné à être stabilise en attitude selon des axes de roulis (X), lacet (Z) et tangage (Y) sur une orbite terrestre au moins approximativement circulaire autour de l'axe terrestre NORD-SUD et comportant un corps muni de faces NORD et SUD, un ensemble de détection d'attitude (7), un calculateur de bord (8) connecté à cet ensemble de détection d'attitude, au moins une aile (4, 5) de générateur solaire s'étendant sensiblement parallèlement à l'axe de tangage (Y) et reliée au corps par un dispositif (6) de commande en rotation autour de l'axe de tangage commandé par le calculateur de bord (8) en sorte que cette aile reste en permanence au moins approximativement perpendiculaire au rayonnement solaire, un système (15, 16, 17) de stockage d'énergie cinétique selon au moins trois axes commandé par le calculateur de bord, et un système de propulsion de contrôle d'attitude et de correction d'orbite (60, 61-64) commandé par le calculateur de bord et comportant des moyens de contrôle d'attitude et un système de propulsion de correction d'orbite, caractérisé en ce que :
- le système de propulsion de correction d'orbite est exclusivement électrique, et comporte au moins une première paire de deux propulseurs électriques (61-64) disposés sensiblement symétriquement par rapport au plan des axes de tangage et de lacet avec des inclinaisons non nulles par rapport au plan des axes de roulis et de lacet et au plan des axes de tangage et de lacet, et des inclinaisons au plus égales à 20° environ par rapport au plan des axes de roulis et de tangage, et
- les moyens de contrôle d'attitude comportent, entre ce corps et cette aile de générateur solaire, un dispositif (6') de commande en basculement de cette aile adapté à commander en basculement cette aile transversalement au rayonnement solaire, ce dispositif de commande en basculement étant commandé par le calculateur de bord en sorte de générer par interaction avec le rayonnement solaire des couples de contrôle d'attitude en tangage.

15. Satellite selon la revendication 14, caractérisé en ce que les propulseurs électriques (61-64), de ladite première paire sont disposés auprès de l'une des faces NORD et SUD.

16. Satellite selon la revendication 15, caractérisé en ce que les propulseurs électriques (61-64) de ladite première paire sont disposés auprès d'arêtes bordant cette face parallèlement à l'axe de lacet.

17. Satellite selon la revendication 16, caractérisé en ce que les propulseurs électriques sont disposés sensiblement au milieu de ces arêtes.

18. Satellite selon l'une quelconque des revendications 14 à 17, caractérisé en ce que le système de propulsion comporte une seconde paire de deux propulseurs électriques (61-64) disposes sensiblement symétriquement par rapport au plan des axes de tangage et de lacet avec des inclinaisons non nulles par rapport au plan des axes de roulis et de lacet mais de sens contraire de celles des propulseurs de la première paire, des inclinaisons non nulles par rapport au plan des axes de lacet et de tangage, et des inclinaisons au plus égales à 20° environ par rapport au plan des axes de roulis et de tangage.

19. Satellite selon la revendication 18, caractérisé en ce que les première et seconde paires de propulseurs électriques (61-64) sont sensiblement symétriques par rapport au plan des axes de roulis et de lacet.

20. Satellite selon la revendication 18 ou la revendication 19, caractérisé en ce que le système de propulsion comporte quatre propulseurs électriques seulement.

21. Satellite selon l'une quelconque des revendications 14 à 20, caractérisé en ce que chaque propulseur électrique a une inclinaison par rapport à l'axe de roulis dont la valeur absolue est comprise entre 40° et 75°, et une inclinaison par rapport à l'axe de tangage dont le valeur absolue est comprise entre 15° et 65°.

22. Satellite selon l'une quelconque des revendications 14 à 21, caractérisé en ce que ce satellite comporte une seconde aile de générateur solaire s'étendant sensiblement parallèlement à l'axe de tangage (Y) à l'opposé de la première aile, et reliée au corps par un second dispositif de commande en rotation autour de l'axe de tangage commandé par le calculateur de bord en sorte que cette seconde aile reste en permanence au moins approximativement perpendiculaire au rayonnement solaire, et par un second dispositif de commande en basculement de cette seconde aile parallèlement à une pluralité de plans contenant l'axe de tangage, les dispositifs de commande en basculement des ailes étant commandés conjointement par le calculateur de bord.

23. Satellite selon l'une quelconque des revendications 14 à 22, caractérisé en ce que le système de stockage d'énergie cinétique est dépourvu de rigidité gyroscopique permanente, étant formées d'au moins trois roues à réaction (15, 16, 17) à moment cinétique pouvant devenir nul.

24. Satellite selon l'une quelconque des revendications 14 à 23, caractérisé en ce que certains au moins des propulseurs électriques sont des tuyères ioniques.

25. Satellite selon l'une quelconque des revendications 14 à 24, caractérisé en ce que certains au moins des propulseurs électriques sont des propulseurs à plasma.

26. Satellite selon l'une quelconque des revendications 14 à 25, caractérisé en ce que ce satellite comporte un système (60) pour le contrôle d'attitude pendant la phase d'injection en orbite opérationnelle, qui est connecté à un même réservoir (72) de mono-ergol que les propulseurs électriques.

27. Satellite selon l'une quelconque des revendications 14 à 25, caractérisé en ce que ce satellite comporte un système bi-ergols de propulsion et de contrôle d'attitude pour la phase d'injection en orbite opérationnelle.

28. Satellite selon l'une quelconque des revendications 14 à 27, caractérisé en ce qu'aussi bien le dispositif (6) de commande en rotation que le dispositif (6') de commande en basculement de chaque aile est commandé par le calculateur de bord pour générer des corrections d'attitude selon les trois axes, par utilisation de la pression de radiation solaire sur chaque aile.

29. Satellite selon l'une quelconque des revendications 14 à 27, caractérisé en ce que le calculateur de bord est adapté à commander des corrections d'attitude en lacet par les propulseurs électriques.

30. Procédé de contrôle d'attitude d'un satellite en orbite ayant un axe de tangage sensiblement perpendiculaire au plan de l'orbite, comportant une surface (4, 5) destinée principalement à être soumise au rayonnement solaire et s'étendant à partir du satellite selon une direction donnée (Y) sensiblement parallèle à l'axe de tangage, un dispositif de mesure d'attitude (7) et un calculateur adapté à déterminer la valeur d'un couple de correction d'attitude à appliquer en tangage, caractérisé en ce qu'on bascule ladite surface transversalement au rayonnement solaire en sorte de générer par interaction avec la pression de radiation solaire un couple de tangage sensiblement égal au couple de correction d'attitude à appliquer en tangage.

31. Procédé selon la revendication 30, caractérisé en ce que, préalablement à l'application d'une poussée de contrôle d'orbite selon une direction donnée de poussée, on estime l'amplitude et la direction de l'écart du centre de gravité du satellite (O') à cette direction donnée de poussée à partir de perturbations d'attitude lors d'une manoeuvre d'orbite antérieure, et on bascule ladite surface, au moins en partie, parallèlement à un plan contenant la direction donnée selon laquelle s'étend la surface et la direction de l'écart en sorte de rapprocher le centre de gravité de ladite direction donnée de poussée.

32. Procédé selon la revendication 31, caractérisé en ce que lors de chaque manoeuvre de contrôle d'orbite, on stabilise l'attitude du satellite par action sur un système à moment cinétique orientable puis, avant la manoeuvre de contrôle d'orbite suivante, on bascule ladite surface parallèlement au rayonnement solaire, en sorte de stabiliser le satellite en tangage et de ramener le moment cinétique orientable dans une orientation donnée par rapport au satellite.

33. Procédé selon l'une quelconque des revendications 30 à 33, caractérisé en ce qu'on applique des poussées de contrôle d'orbite, par actionnement de tuyères électriques (61-64), sensiblement parallèlement au plan roulis-tangage.

## Claims

1. Three-axis stabilised satellite having a body (3) having a pitch axis substantially perpendicular to the plane of the orbit and having at least one surface (4, 5) intended principally to be exposed to solar radiation and extending from the body in a given direction substantially parallel to the pitch axis, an onboard computer (8) and connected to the latter an attitude sensor system (7) adapted to sense the attitude of the body at least about the pitch axis, active attitude control means adapted to apply attitude correction torques at least in pitch, and orbit control means (9, 60) adapted to apply thrusts to the satellite along given thrust axes, characterised in that said pitch attitude control means include means (6', 20, 30, 40) between said surface and the body for tilting said surface substantially transversely to the solar radiation by an amount controlled by the onboard computer with or without action from the ground, to generate said pitch attitude control torques by interaction of said surface with the solar radiation pressure.

2. Satellite according to claim 1 characterised in that said surface intended principally to be exposed to solar radiation is a plane solar generator panel (4, 5) extending along the given direction and connected to the satellite by a drive motor (6) adapted to rotate said panel about said given direction.

3. Satellite according to claim 2 characterised in that the tilt means comprise said drive motor and a second motor (20, 30, 40) disposed between said drive motor and the solar generator panel.

4. Satellite according to claim 3 characterised in that said second motor is a rotary motor (40) having an axis inclined at a non-null angle α relative to said given direction.

5. Satellite according to claim 4 characterised in that said non-null angle is between 2° and 15°.

6. Satellite according to any one of claims 1 through 3 characterised in that the tilt means comprise a pivot motor (30) whose axis is transverse to said given direction.

7. Satellite according to claim 6 characterised in that said motor (30) provides a range of movement of at most 15° relative to said given direction.

8. Satellite according to claim 6 or claim 7 characterised in that the tilt means comprise a second pivot motor whose axis is transverse to said given direction and having a non-null inclination to the axis of the first pivot motor.

9. Satellite according to any one of claims 1 through 3 characterised in that the tilt means comprise a linear motor (40) extending in a direction inclined to the given direction and mounted on one side of a deformable articulated triangle coupling said surface to the satellite.

10. Satellite according to any one of claims 1 through 9 characterised in that the orbit control means comprise electric thrusters (61-64).

11. Satellite according to any one of claims 1 through 9 characterised in that the orbit control means comprise electric arc ionisation thrusters.

12. Satellite according to any one of claims 1 through 11 characterised in that the attitude control means during orbit control manoeuvres comprise said surface and the tilt means.

13. Satellite according to any one of claims 1 through 12 characterised in that the attitude control means during orbit control manoeuvres comprise an orientable angular momentum system (9').

14. Satellite adapted to be stabilised in attitude about roll (X), yaw (Z) and pitch (Y) axes in an at least approximately circular terrestrial orbit around the terrestrial North-South axis and comprising a body having North and South sides, an attitude sensor system (7), an onboard computer (8) connected to said attitude sensor system, at least one solar generator panel (4, 5) extending substantially parallel to the pitch axis (Y) and coupled to the body by a device (6) for rotating it about the pitch axis under the control of the onboard computer (8) so that said panel remains at all times at least approximately perpendicular to the solar radiation, a kinetic energy storage system (15, 16, 17) for at least three axes controlled by the onboard computer and an attitude control and orbit correction propulsion system (60, 61-64) controlled by the onboard computer and including attitude control means and an orbit correction propulsion system, characterised in that:
- the orbit correction propulsion system is exclusively electrical and comprises at least a first pair of two electric thrusters (61-64) disposed substantially symmetrically relative to the plane of the pitch and yaw axes with non-null inclinations relative to the plane of the roll and yaw axes and to the plane of the pitch and yaw axes and inclinations of not more than approximately 20° to the plane of the roll and pitch axes, and
- the attitude control means comprise between said body and said solar generator panel a device (6') for tilting said panel transversely to the solar radiation, said tilt device being controlled by the onboard computer to generate pitch attitude control torques by interaction with the solar radiation.

15. Satellite according to claim 14 characterised in that the electric thrusters (61-64) of said first pair are disposed near one of the North and South sides.

16. Satellite according to claim 15 characterised in that the electric thrusters (61-64) of said first pair are disposed near edges bordering said side parallel to the yaw axis.

17. Satellite according to claim 16 characterised in that the electric thrusters are disposed substantially at the middle of said edges.

18. Satellite according to any one of claims 14 through 17 characterised in that the propulsion system comprises a second pair of electric thrusters (61-64) disposed substantially symmetrical to the plane of the pitch and yaw axes with non-null inclinations to the plane of the roll and yaw axes but in the opposite direction to the thrusters of the first pair, non-null inclinations to the plane of the yaw and pitch axes and inclinations of not more than approximately 20° to the plane of the roll and pitch axes.

19. Satellite according to claim 18 characterised in that the first and second pairs of electric thrusters (61-64) are substantially symmetrical to the plane of the roll and yaw axes.

20. Satellite according to claim 16 or claim 19 characterised in that the propulsion system comprises four electric thrusters only.

21. Satellite according to any one of claims 14 through 20 characterised in that each electric thruster is inclined to the roll axis at an angle between 40° and 75° in absolute value and to the pitch axis at an angle between 15° and 65° in absolute value.

22. Satellite according to any one of claims 14 through 21 characterised in that it comprises a second solar generator panel extending substantially parallel to the pitch axis (Y) on the opposite side to the first panel and coupled to the body by a second device for rotating it about the pitch axis under the control of the onboard computer so that said second panel is at all times at least approximately perpendicular to the solar radiation and by a second device for tilting said second panel parallel to a plurality of planes containing the pitch axis, the panel tilt devices being controlled conjointly by the onboard computer.

23. Satellite according to any one of claims 14 through 22 characterised in that the kinetic energy storage system has no permanent gyroscopic stiffness, comprising at least three reaction wheels (15, 16, 17) whose angular momentum can be reduced to zero.

24. Satellite according to any one of claims 14 through 23 characterised in that at least some of the electric thrusters are ion thrusters.

25. Satellite according to any one of claims 14 through 24 characterised in that at least some of the electric thrusters are plasma thrusters.

26. Satellite according to any one of claims 14 through 25 characterised in that it comprises a system (60) for attitude control during the phase of injection into the operational orbit connected to the same single-propellant storage tank (72) as the electric thrusters.

27. Satellite according to any one of claims 14 through 25 characterised in that it comprises a dual-fuel propulsion and attitude control system for the operational orbit injection phase.

28. Satellite according to any one of claims 14 through 27 characterised in that the rotation device (6) and the tilting device (6') of each panel are controlled by the onboard computer to generate attitude correction about the three axes using the solar radiation pressure on each panel.

29. Satellite according to any one of claims 14 through 27 characterised in that the onboard computer is adapted to control yaw attitude correction by the electric thrusters.

30. Method of controlling the attitude of a satellite having a pitch axis substantially perpendicular to the plane of the orbit and having a surface (4, 5) intended principally to be exposed to solar radiation and extending from the satellite in a given direction (Y), an attitude measuring device (7) and a computer adapted to determine the value of an attitude correction torque to be applied in pitch, characterised in that said surface is tilted transversely to the solar radiation so as to generate by interaction with the solar radiation pressure a pitch torque substantially equal to the required pitch attitude correction torque.

31. Method according to claim 30 characterised in that previously to applying an orbit control thrust in a given direction the amplitude and the direction of the offset of the satellite centre of gravity (O') from this given thrust direction resulting from attitude disturbances during a previous orbit manoeuvre are estimated and said surface is tilted at least in part parallel to a plane containing the given direction in which the surface extends and the direction of the difference so as to move the centre of gravity towards said given thrust direction.

32. Method according to claim 31 characterised in that during each orbit control manoeuvre the attitude of the satellite is stabilised by action on an orientable angular momentum system after which, before the next orbit control manoeuvre, said surface is tilted parallel to the solar radiation to stabilise the satellite in pitch and to move the orientable angular momentum into a given orientation relative to the satellite.

33. Method according to any one of claims 30 through 33 characterised in that orbit control thrusts are applied by operation of electric thrusters (61-64) substantially parallel to the roll-pitch plane.

## Patentansprüche

1. Dreiachsenstabilisierter, einen Orbit beschreibender Satellit, umfassend einen Körper (3) mit einer zur Ebene des Orbits im wesentlichen senkrechten Nickachse und umfassend mindestens eine Fläche (4, 5), die hauptsächlich dazu bestimmt ist, der Sonnenstrahlung ausgesetzt zu sein, und sich von dem Körper aus in einer gegebenen, zur Nickachse im wesentlichen parallelen Richtung erstreckt, einen Bordrechner (8) und, an diesen angeschlossen, ein System (7) zur Lageerfassung, das geeignet ist, die Lage des Körpers mindestens um die Nickachse zu erfassen, aktive Lagesteuermittel, die geeignet sind, Lagekorrekturmomente mindestens bezüglich Nicken anzulegen, und Orbitsteuermittel (9, 60), die geeignet sind, an den Satelliten Schübe in Schubachsen anzulegen, dadurch gekennzeichnet, daß diese Nicklagesteuermittel Kippantriebsmittel (6', 20, 30, 40) zwischen dieser Fläche und dem Körper umfassen, die geeignet sind, diese Fläche bezüglich Kippen im wesentlichen quer zur Sonnenstrahlung mit einer durch den Bordrechner eingestellten Amplitude zu steuern, und zwar mit oder ohne Eingriff des Bodens, so daß durch Wechselwirkung dieser Fläche mit dem Sonnenstrahlungsdruck diese Nicklagekorrekturmomente erzeugt werden.

2. Satellit nach Anspruch 1, dadurch gekennzeichnet, daß diese Fläche, die hauptsächlich dazu bestimmt ist, der Sonnenstrahlung ausgesetzt zu sein, ein ebener Solargeneratorflügel (4, 5) ist, der sich in der gegebenen Richtung erstreckt und mit dem Satelliten durch einen Antriebsmotor (6) verbunden ist, der geeignet ist, diesen Flügel um diese gegebene Richtung zu drehen.

3. Satellit nach Anspruch 2, dadurch gekennzeichnet, daß die Kippantriebsmittel diesen Antriebsmotor und einen zweiten Motor (20, 30, 40) umfassen, der zwischen diesem Antriebsmotor und dem Solargeneratorflügel gelegen ist.

4. Satellit nach Anspruch 3, dadurch gekennzeichnet, daß dieser zweite Motor ein rotierender Motor (40) mit einer Achse ist, die in einem Winkel von nicht Null (α) bezüglich dieser gegebenen Richtung geneigt ist.

5. Satellit nach Anspruch 4, dadurch gekennzeichnet, daß dieser Winkel von nicht Null 2° bis 15° beträgt.

6. Satellit nach einem der Ansprüche 1 bis 3, dadurch gekennzeichnet, daß die Kippantriebsmittel einen Schwenkmotor (30) mit einer quer zu dieser gegebenen Richtung gerichteten Achse umfassen.

7. Satellit nach Anspruch 6, dadurch gekennzeichnet, daß dieser Motor (30) einen Ausschlag von höchstens 50 % bezüglich dieser gegebenen Richtung zuläßt.

8. Satellit nach Anspruch 6 oder Anspruch 7, dadurch gekennzeichnet, daß die Kippmittel einen zweiten Schwenkmotor mit einer zu dieser gegebenen Richtung sich quer erstreckenden Achse umfassen, die eine Neigung von nicht Null zu der Achse des ersten Schwenkmotors besitzt.

9. Satellit nach einem der Ansprüche 1 bis 3, dadurch gekennzeichnet, daß die Kippantriebsmittel einen Linearmotor (40) besitzen, der sich in einer bezüglich der gegebenen Richtung geneigten Richtung erstreckt und auf einer Seite eines gelenkigen verformbaren Dreiecks montiert ist, das diese Fläche mit dem Satelliten verbindet.

10. Satellit nach einem der Ansprüche 1 bis 9, dadurch gekennzeichnet, daß die Orbitsteuermittel elektrische Düsen (61-64) umfassen.

11. Satellit nach einem der Ansprüche 1 bis 9, dadurch gekennzeichnet, daß die Orbitsteuermittel Lichtbogenionisationsdüsen umfassen.

12. Satellit nach einem der Ansprüche 1 bis 11, dadurch gekennzeichnet, daß die Mittel zur Lagesteuerung während der Orbitsteuermanöver diese Fläche und die Kippantriebsmittel umfassen.

13. Satellit nach einem der Ansprüche 1 bis 12, dadurch gekennzeichnet, daß die Mittel zur Lagesteuerung während der Orbitsteuermanöver ein System mit verschwenkbarem kinetischen Moment (9') umfassen.

14. Satellit, der dazu bestimmt ist, in der Rollachse (X), Gierachse (Z) und Nickachse (Y) auf einem mindestens annähernd kreisförmigen Erdorbit um die terrestrische NORD-SÜD-Achse lagestabilisiert zu werden, und folgendes umfaßt: einen mit NORD- und SÜD-Seiten versehenen Körper, eine Lageerfassungseinheit (7), einen Bordrechner (8), der mit dieser Lageerfassungseinheit verbunden ist, mindestens einen Solargeneratorflügel (4, 5), der sich im wesentlichen parallel zur Nickachse (Y) erstreckt und mit dem Körper durch eine Vorrichtung (6) zum Drehantrieb um die Nickachse verbunden ist, die durch den Bordrechner (8) gesteuert ist, so daß dieser Flügel ständig mindestens annähernd senkrecht zur Sonnenstrahlung bleibt, ein durch den Bordrechner gesteuertes System (15, 16, 17) zur Speicherung von kinetischer Energie in mindestens drei Achsen und ein Antriebssystem zur Lagesteuerung und Orbitkorrektur (60, 61-64), das durch den Bordrechner gesteuert ist und Lagesteuermittel und ein Antriebssystem zur Orbitkorrektur umfaßt, dadurch gekennzeichnet,
- daß das Antriebssystem zur Orbitkorrektur ausschließlich elektrisch ist und mindestens ein erstes Paar von zwei elektrischen Antriebsorganen (61-64) umfaßt, die im wesentlichen symmetrisch bezüglich der Ebene der Nick- und Gierachsen mit Neigungen von nicht Null bezüglich der Ebene der Rollachse und der Gierachse und bezüglich der Ebene der Nickachse und der Gierachse und mit Neigungen von höchstens gleich etwa 20° bezüglich der Ebene der Rollachse und der Nickachse angeordnet sind, und
- die Lagesteuermittel zwischen diesem Körper und diesem Solargeneratorflügel eine Vorrichtung (6') zum Kippantrieb dieses Flügels umfassen, die geeignet ist, die Kippbewegung dieses Flügels quer zur Sonnenstrahlung zu bewirken, wobei diese Kippantriebsvorrichtung durch den Bordrechner so gesteuert ist, daß sie durch Interaktion mit der Sonnenstrahlung Nick-Lagekontrollmomente erzeugt.

15. Satellit nach Anspruch 14, dadurch gekennzeichnet, daß die elektrischen Antriebsorgane (61-64) des ersten Paars bei einer der NORD- und SÜD-Seiten angeordnet sind.

16. Satellit nach Anspruch 15, dadurch gekennzeichnet, daß die elektrischen Antriebsorgane (61-64) dieses ersten Paars bei Kanten angeordnet sind, die diese Seite parallel zur Gierachse säumen.

17. Satellit nach Anspruch 16, dadurch gekennzeichnet, daß die elektrischen Antriebsorgane im wesentlichen in der Mitte dieser Kanten angeordnet sind.

18. Satellit nach einem der Ansprüche 14 bis 17, dadurch gekennzeichnet, daß das Antriebssystem ein zweites Paar von zwei elektrischen Antriebsorganen (61-64) besitzt, die im wesentlichen symmetrisch bezüglich der Ebene der Nickachse und der Gierachse mit Neigungen von nicht Null bezüglich der Ebene der Rollachse und der Gierachse, die jedoch zu denen der Antriebsorgane des ersten Paars entgegengesetzt gerichtet sind, mit Neigungen von nicht Null bezüglich der Ebene der Gierachse und der Nickachse und mit Neigungen von höchstens gleich etwa 20° bezüglich der Ebene der Rollachse und der Nickachse angeordnet sind.

19. Satellit nach Anspruch 18, dadurch gekennzeichnet, daß das erste und das zweite Paar von elektrischen Antriebsorganen (61-64) im wesentlichen bezüglich der Ebene der Rollachse und der Gierachse symmetrisch angeordnet sind.

20. Satellit nach Anspruch 18 oder Anspruch 19, dadurch gekennzeichnet, daß das Antriebssystem vier elektrische Antriebsorgane umfaßt.

21. Satellit nach einem beliebigen der Ansprüche 14 bis 20, dadurch gekennzeichnet, daß jedes elektrische Antriebsorgan eine Neigung bezüglich der Rollachse hat, deren absoluter Wert 40° bis 75° beträgt, und eine Neigung bezüglich der Nickachse, deren absoluter Wert 15 bis 65° beträgt.

22. Satellit nach einem der Ansprüche 14 bis 21, dadurch gekennzeichnet, daß dieser Satellit einen zweiten Solargeneratorflügel aufweist, der sich im wesentlichen parallel zur Nickachse (Y) auf der dem ersten Flügel entgegengesetzten Seite erstreckt und mit dem Körper durch eine zweite Vorrichtung zum Drehantrieb um die Nickachse verbunden ist, die durch den Bordrechner so gesteuert wird, daß dieser zweite Flügel ständig mindestens annähernd senkrecht zur Sonnenstrahlung bleibt, und durch eine zweite Vorrichtung zum Kippantrieb dieses zweiten Flügels parallel zu einer Vielzahl von die Nickachse enthaltenden Ebenen verbunden ist, wobei die Vorrichtungen zum Kippantrieb der Flügel gemeinsam durch den Bordrechner gesteuert sind.

23. Satellit nach einem der Ansprüche 14 bis 22, dadurch gekennzeichnet, daß das System zur Speicherung von kinetischer Energie frei von permanenter gyroskopischer Steifheit ist, wobei es von mindestens drei Reaktionsrädern (15, 16, 17) mit kinetischem Moment, das Null werden kann, gebildet ist.

24. Satellit nach einem der Ansprüche 14 bis 23, dadurch gekennzeichnet, daß mindestens manche der elektrischen Antriebsorgane ionische Düsen sind.

25. Satellit nach einem der Ansprüche 14 bis 24, dadurch gekennzeichnet, daß mindestens manche der elektrischen Antriebsorgane Plasmaantriebsorgane sind.

26. Satellit nach einem der Ansprüche 14 bis 25, dadurch gekennzeichnet, daß dieser Satellit ein System (60) zur Lagesteuerung während der Phase des Einschießens in den Operationsorbit besitzt, das mit demselben Monoergolbehälter (72) wie die elektrischen Antriebsorgane verbunden ist.

27. Satellit nach einem der Ansprüche 14 bis 25, dadurch gekennzeichnet, daß dieser Satellit ein Biergol-Antriebs- und Lagesteuersystem für die Phase des Einschießens in den Operationsorbit besitzt.

28. Satellit nach einem der Ansprüche 14 bis 27, dadurch gekennzeichnet, daß sowohl die Drehantriebsvorrichtung (6) als auch die Kippantriebsvorrichtung (6') jedes Flügels durch den Bordrechner gesteuert ist, um Lagekorrekturen in den drei Achsen durch Verwendung des Sonnenstrahlungsdrucks auf jedem Flügel zu erzeugen.

29. Satellit nach einem der Ansprüche 14 bis 27, dadurch gekennzeichnet, daß der Bordrechner geeignet ist, Gierlagekorrekturen durch die elektrischen Antriebsorgane zu erzeugen.

30. Verfahren zur Steuerung der Lage eines Satelliten im Orbit mit einer zur Ebene des Orbits im wesentlichen senkrechten Nickachse, umfassend eine Fläche (4, 5), die hauptsächlich dazu bestimmt ist, der Sonnenstrahlung ausgesetzt zu sein, und sich vom Satelliten aus in einer gegebenen, im wesentlichen zur Nickachse parallelen Richtung (Y) erstreckt, eine Lagemeßvorrichtung (7) und einen Rechner, der geeignet ist, den Wert eines bezüglich Nicken anzulegenden Lagekorrekturmoments zu bestimmen, dadurch gekennzeichnet, daß man diese Fläche quer zur Sonnenstrahlung so kippt, daß durch Wechselwirkung mit dem Sonnenstrahlungsdruck ein Nickmoment erzeugt wird, das im wesentlichen gleich dem bezüglich Nicken anzulegenden Lagekorrekturmoment ist.

31. Verfahren nach Anspruch 30, dadurch gekennzeichnet, daß man vor dem Anlegen eines Orbitsteuerschubs in einer gegebenen Schubrichtung die Amplitude und die Richtung der Abweichung des Schwerpunkts des Satelliten (0') von dieser gegebenen Schubrichtung, ausgehend von Lagestörungen bei einem früheren Orbitmanöver, schätzt und diese Fläche zumindest zum Teil parallel zu einer Ebene kippt, die die gegebene Richtung, in welcher sich die Fläche erstreckt, und die Richtung der Abweichung enthält, so daß der Schwerpunkt dieser gegebenen Schubrichtung angenähert wird.

32. Verfahren nach Anspruch 31, dadurch gekennzeichnet, daß man bei jedem Orbitsteuermanöver die Lage des Satelliten durch Einwirkung auf ein System mit verschwenkbarem kinetischen Moment stabilisiert und dann vor dem folgenden Orbitsteuermanöver diese Fläche parallel zur Sonnenstrahlung kippt, so daß der Satellit bezüglich Nicken stabilisiert wird und das verschwenkbare kinetische Moment in eine gegebene Richtung bezüglich des Satelliten gebracht wird.

33. Verfahren nach einem der Ansprüche 30 bis 33, dadurch gekennzeichnet, daß man Orbitsteuerschübe durch Betätigung von elektrischen Düsen (61-64) im wesentlichen parallel zur Roll-Nick-Ebene anlegt.
